# EUROPEAN PATENT APPLICATION

(11) **EP 4 389 273 A1**
(43) Date of publication of application: **26.06.2024**
(21) Application number: 22214845.4
(22) Date of filing: 20.12.2022
(51) Int. Cl.: B01J 3/03, B01J 3/04, B01J 19/00, B01J 19/26, C08F 110/02

(54) **A TUBULAR REACTOR COMPRISING A THERMOCOUPLE DEVICE FOR MEASURING A TEMPERATURE WITHIN THE TUBULAR REACTOR**

(71) Applicant: ExxonMobil Chemical Patents Inc., Baytown, TX 77520-2101 (US)
(72) Inventor: DEWITTE, Cindy, Puurs (BE); VERLUYTEN, Frankie K. R., Hoeselt (BE); LAMMENS, Henri A., Antwerpen (BE); CORNELISSEN, Philip H., Heverlee (BE)
(74) Representative: ExxonMobil Chemical Europe LLC

(57) **Abstract**

The present invention relates to tubular reactors, optionally in combination with autoclave reactors, for high pressure polymerization of a monomer, preferably ethylene. The tubular reactor comprises at least one thermocouple device for measuring a temperature within the reactor. The invention also concerns a polymerization reactor system comprising said tubular reactor and methods of preparing a polymer in said polymerization reactor system.

## Description

### Field of the Invention

The present invention concerns tubular reactors for high pressure polymerization of a monomer, preferably ethylene, comprising a thermocouple device for measuring a temperature within the reactor. The invention also concerns a polymerization reactor system comprising the tubular reactor and a method of preparing a polymer, preferably a polyethylene polymer, in the polymerization reactor system. The method comprises polymerizing a monomer in the tubular reactor of the polymerization reactor system and measuring a temperature of the tubular reactor using a thermocouple device according to the invention during the polymerization process.

### Background of the Invention

High pressure polymerization manufacturing processes require good temperature control. The production of polymers, such as polyethylene (e.g. LDPE), is an exothermic process and therefore generates heat. Cooling is required to maintain the reaction temperatures within safe and desired limits and to reduce the temperature of the reaction mixture to a suitable initiation temperature for contacting with additional initiator in subsequent reaction zones. Heat may be removed from the polymerization reactor using a reactor jacket water system. Additionally, relatively cool side-streams of monomer may be introduced along the length of the reactor in cooling zones located between reaction zones. The reactor temperature reaches a peak when the initiator is consumed and the polymerization reaction discontinues. Multiple initiator injection points may be located along the length of the tubular reactor and used to control the temperature profile of the reactor.

When the temperature generated inside the reactor is not well controlled, the heat generated by polymerization may exceed the cooling capacity of the reactor jacket water system. In such a scenario, the temperature inside the reactor can rapidly increase to an undesirable level. Temperatures exceeding ideal polymerization temperatures can potentially cause undesired reactions such as 'run-away' or `reactor decomposition' reactions.

The properties of the polymer produced in a high pressure polymerization process are influenced by the reactor temperature profile. Therefore, good reactor temperature control is important in achieving desired polymer characteristics.

Thermocouple probes may be inserted into tubular reactors to monitor the reactor temperature profile. The thermocouple probe may be inserted into the tubular reactor through a gasket that joins together two sections of the tubular reactor. To avoid impeding the flow within the reactor and to prevent damage caused by solid particle impact, a tip of the thermocouple probe for temperature measurement is located relatively close to the reactor wall. However, the temperature recorded by the thermocouple probe may be several degrees lower than the true reactor temperature, and the deviation between the true and measured temperature within the reactor may increase as the polymerization reaction progresses. The output of the thermocouple probe is also prone to oscillate.

It is thought that reactor fouling around the interior reactor walls of a tubular reactor is associated with many of the problems of accurately measuring reactor temperatures using thermocouple probes. Reactor defouling processes may be used to remove the fouling layer. Intentional, temporary pressure drops in the reactor called `bump cycles' may be effected by the operation of high-pressure 'let-down' valves located towards the exit of the reactor. Bump cycles may be used to prevent accumulation of polymer on the interior walls of the reactor. More accurate temperatures may be recorded by the thermocouple probe once the reactor returns to operation after de-fouling and/or a bump cycle. However, as the polymerization reaction progresses, the temperature recorded by the thermocouple probe may soon start to fluctuate and deviate from the true temperature within the reactor.

A consequence of inaccurate temperature measurement is that the temperature profile within the reactor is poorly understood making it challenging to maintain the desired temperature profile of the reactor.

References of potential interest include WO 2017/106,940 A1; US 8,308,087; US 6,384,153; US 2006/0167,193 A1, US 8,217,124; WO 2018/127,533 A1; US 4,008,049; US 3,506,715; SU 1,016,303 A; CN 112973575.

The present invention seeks to mitigate the above-mentioned problems. Alternatively or additionally, the present invention seeks to provide an improved tubular reactor comprising a thermocouple probe, wherein the thermocouple probe is arranged so that the location of the tip of the thermocouple probe within the reactor is such that at an accurate temperature measurement may be obtained. Accurate temperature measurement may allow the temperature profile of the reactor to be accurately monitored and controlled.

### Summary of the Invention

The present invention provides, according to a first aspect, a tubular reactor for high pressure polymerization of a monomer and optionally a comonomer to form a polymer, wherein the tubular reactor has a tubular reactor wall and a central axis; wherein the tubular reactor wall is formed from tubular reactor wall sections arranged end to end about the central axis; and, wherein the tubular reactor comprises at least one thermocouple device comprising:
a gasket arranged to seal a junction between two tubular reactor wall sections; and,
at least one thermocouple probe comprising a tip for measuring a temperature within the tubular reactor, wherein the at least one thermocouple probe extends from the gasket into the tubular reactor;
wherein the distance between the tip of the at least one thermocouple probe and the central axis of the tubular reactor is equal to or less than 1/3 R, wherein R is the radial distance from the central axis to the tubular reactor wall at the junction between the two tubular reactor wall sections.

A thermocouple device of the tubular reactor according to the present invention allows a temperature within the tubular reactor to be measured. It will be understood that a tubular reactor is a vessel in which a polymerization reaction of a monomer, and optionally comonomer, occurs. The tubular reactor may be a high pressure tubular reactor that is operational at pressures exceeding 1000 bar, optionally pressures exceeding 2500 bar, for example pressures in the range of from 2800 bar to 3200 bar. The tubular reactor may operate at temperatures in the range of from 150 °C to 400 °C, for example from 170 °C to 300 °C.

The tubular reactor has a tubular reactor wall wherein the internal surface of the tubular reactor wall defines the internal volume of the tubular reactor. The tubular reactor wall is constructed from tubular reactor wall sections. Tubular reactor wall sections are sealed together and the seal is sufficient to withstand the high pressures and temperatures within the tubular reactor. The boundary between each tubular reactor wall section may not by visible once the tubular reactor wall is constructed. The central axis of the tubular reactor runs the length of the tubular reactor in the direction of reaction mixture flow.

The gasket of the thermocouple device is configured to engage with and fill the space between two tubular reactor wall sections. Thus, the gasket is arranged to seal a junction between two tubular reactor wall sections. It will be understood that a gasket has a body and an opening extending through the length of the body. Optionally, the gasket has a body that is substantially cylindrical. The opening of the gasket is arranged to align with the central axis of the reactor and the walls of the tubular reactor. In use, fluid in the reactor flows through the section of tubular reactor upstream of the gasket, through the opening of the gasket and then through the section of the tubular reactor downstream of the gasket. Thus, the opening of the gasket forms part of the tubular reactor when the gasket is arranged between two tubular reactor wall sections. Optionally, the opening may be flush with the interior wall of the tubular reactor wall. The two sections of tubular reactor and the gasket may be flanged together to form a seal that is able to withstand high pressures within the tubular reactor, such as at least 1000 bar.

The diameter of the opening of the gasket may be at least 10 mm, at least 20 mm, or at least 40 mm, or at least 60 mm. The diameter of the opening of the gasket may be less than 120 mm, or less than 100 mm, or less than 90 mm. For example, the diameter of the opening may be within the range of from 40 mm to 100 mm. The diameter of the opening of the gasket may be substantially equal to, or equal to the diameter of the tubular reactor at the junction between the two sections of tubular reactor sealed by the gasket of the thermocouple device. The diameter of the opening of the gasket is substantially equal to the diameter of the tubular reactor immediately upstream and/or immediately downstream of the thermocouple device if the diameter of the opening of the gasket is no more than 15 mm greater or less than the internal diameter of the tubular reactor immediately upstream and/or immediately downstream of the thermocouple device, for example the diameter of the opening of the gasket may be no more than 10 mm greater or less than, or no more than 5 mm greater or less than the diameter of the reactor immediately upstream and/or immediately downstream of the thermocouple device.

The body of the gasket may have a length of at least 20 mm, 30 mm or 50 mm. The length of the body of the gasket may be less than 120 mm, less than 100 mm, or less than 80 mm. For example, the length of the body of the gasket may be between 50 mm and 70 mm, such as 60 mm. It will be understood that the length of the body of the gasket is defined as the distance from an end of the gasket body in contact with the first of the two tubular reactor wall sections to an opposing end of the body in contact with the second of the two tubular reactor wall sections. Thus, the length of the body of the gasket is measured in the direction of the central axis of the reactor.

The body of the gasket has a width extending radially outward from the surface of the gasket body that defines the opening of the gasket to an outermost surface of the gasket body. For example, when the gasket has a substantially cylindrical shape, the width of the body is measured from the inner curved surface of the cylindrical body defining the opening to the outer curved surface of the cylindrical body of the gasket. The width of the gasket body may be substantially equal to the width of the tubular reactor wall. The width of the gasket body may be greater than the width of the tubular reactor wall. The width of gasket body may be at least 100 mm, at least 200 mm, or at least 300 mm. The width of the gasket body may be less than 700 mm, less than 600 mm, or less than 500 mm.

The body of the gasket may further comprises at least one bore extending through the gasket body to the opening of the gasket. The thermocouple probe of the thermocouple device may be inserted into the bore. The bore may extend the entire width of the gasket body from the outermost surface of the gasket body to the opening of the gasket so that a thermocouple probe may be inserted into and removed out of the bore, and thus gasket body, when the gasket is fixed between sections of the tubular reactor wall. Thus, the thermocouple probe may be removed from the thermocouple device for repair or to be replaced with a different thermocouple probe without having to disassemble the tubular reactor. The bore may be autofrettaged to limit deformation. Suitable autofrettage processes are known to the skilled person.

Optionally, the gasket is a lens ring gasket or a cone ring gasket. Preferably, the gasket is a lens ring gasket. Lens ring and cone ring gaskets are known to the skilled person. Lens rings have a greater thickness than cone rings and so may be preferred as a bore therein may be less prone to deformation than a bore optionally provided provided in a cone ring.

The at least one thermocouple probe is a sensor that measures temperature. Types of thermocouple probes are well known to the skilled person. Thermocouple probes typically comprise a thermocouple wire comprising two metallic wires joined together to form a junction and housed inside a metallic tube. The wall of the tube may be referred to as a sheath. The sheath may, for example, be a stainless steel sheath. The two metallic wires are manufactured from different metals and when the junction is heated or cooled, a voltage is generated in the electrical circuit of the thermocouple. The voltage may be measured and correlated to a temperature. At a distal end of the thermocouple probe is the tip of the thermocouple probe and the junction of the thermocouple wire is located at the tip. The tip of the thermocouple probe may be a grounded junction, ungrounded junction or exposed junction. When the tip of the thermocouple probe is inside the reactor, the temperature of the reactor may be measured. The thermocouple probe may be calibrated according to methods known in the art.

The tip of the thermocouple probe of the reactor according to the present invention is inserted into the tubular reactor to a depth sufficient for measuring the temperature within the reactor. It will be understood that the tip of the thermocouple probe extends beyond the gasket of the thermocouple device towards the central axis and thus the tip of the thermocouple device extends into the tubular reactor. Thermocouple devices are typically configured so that the tip of the thermocouple probe is located relatively close to the interior walls of the reactor. In other words, the insertion depth of the thermocouple probe is relatively small. According to the present invention, the thermocouple probe extends into the reactor to a much greater depth than is typical so that distance between the tip of the thermocouple probe and central axis of the tubular reactor is equal to or less than 1/3 R, wherein R is the radial distance from the central axis to the tubular reactor wall at the junction between the two tubular reactor wall sections. Preferably, an internal wall of the gasket defining the opening of the gasket is flush with the internal surface of the tubular reactor wall immediately upstream and/or immediately downstream of the thermocouple device. When the internal wall of the gasket and the internal surface of the tubular reactor wall are flush, the radial distance from the central axis of the reactor to the internal wall of the gasket defining the gasket opening is equal to R. The distance between the thermocouple probe (e.g. the tip of the thermocouple probe) and the central axis of the reactor is used herein to describe the depth to which the thermocouple probe is inserted into the reactor. For example, the tip of the thermocouple probe of the thermocouple device according to the present invention is located at a distance from the central axis of the reactor that may be defined as a fraction or percentage of R. The smaller the distance between the thermocouple probe tip and the central axis of the reactor, the greater the depth to which the thermocouple probe is inserted into the reactor.

It has been found by the present inventors that the thermocouple device of the present invention allows a more accurate temperature measurement to be taken during the course of a polymerization reaction. Without wishing to be bound by theory, it is thought that the tip of the thermocouple probe extends beyond the fouling layer that builds on the wall of the tubular reactor over the course of the polymerization reaction. It may be that the present tubular reactor equipped with thermocouple device allows fewer or less frequent defouling cycles to be used. Similarly the number of `bump cycles' (temporary pressure drops in the reactor which may be effected by the operation of high-pressure 'let-down' valves located towards the exit of the reactor) used in a polymerization process may be reduced or bump cycles entirely eliminated. That may in turn lead to an improvement of the reliability of the high-pressure let down valve. The temperature measured by the thermocouple device according to the present invention may be more accurate so that it deviates less from the true temperature within the reactor. It may be that the reading provided by the thermocouple probe does not fluctuate from the true temperature within the reactor. More accurate temperature monitoring within the reactor may aid better temperature control of the reactor temperature profile.

It may be that the tubular reactor according to the present invention is constructed from a conventional high pressure tubular reactor, particularly a high pressure tubular reactor suitable for polymerizing ethylene to form a polyethylene polymer. The conventional high pressure tubular reactor may have been modified to be in accordance with the invention by increasing the insertion depth of a conventional thermocouple probe into the reactor so that the tip of the thermocouple device is located at a distance equal to or less than 1/3R from the central axis of the tubular reactor, wherein R is the radial distance from the central axis to the tubular reactor wall at the junction between the two tubular reactor wall sections.

Optionally, the distance between the tip of the at least one thermocouple probe and the central axis of the tubular reactor is equal to or less than 1/6 R. It may be that the distance between the tip of the thermocouple probe and the central axis of the tubular reactor is no more than 15 mm, no more than 10 mm, or no more than 5 mm. It may be that the distance between the tip of the thermocouple probe and the central axis is at least 1 mm, at least 2 mm or at least 3 mm. Optionally, the tip of the thermocouple probe is located greater than 8 mm from the reactor wall, greater than 10 mm from the reactor wall or greater than 15 mm from the reactor wall. It may be that the tip of the thermocouple probe is located substantially within the centre of the reactor, for example within 5 mm of the central axis of the tubular reactor, or within 1 mm of the central axis of the tubular reactor. It may be that locating the tip of the thermocouple probe substantially within the centre of the reactor allows accurate temperature measurement. The reading recorded by the thermocouple probe may be less prone to fluctuate or deviate from the true temperature within the reactor. Preferably, the thermocouple probe including the tip does not extend beyond the central axis of the reactor.

The tubular reactor has an internal diameter defined by the internal surface of the tubular reactor wall. The diameter of a tubular reactor may be uniform across substantially all of the length of the reactor, for example the diameter of the tubular reactor may be the same across at least 80% of the length of the reactor, at least 90 % of the length of the reactor, or at least 95% of the length of the reactor. It may be that the tubular reactor narrows at the start or end of the reactor, or at initiator or monomer (and optional comonomer) injection locations along the length of the reactor. The diameter of the tubular reactor may vary across the length of the tubular reactor. The various diameters across the length of the tubular reactor may be selected so that the pressure drop across the tubular reactor is reduced or minimised. Appropriate diameters across the length of the tubular reactor may be selected by a person skilled in the art in order to maintain the velocity of the reaction mixture in the reaction zones at a sufficient rate to thoroughly mix the initiator and monomer (and optional comonomer). Appropriate diameters of the tubular reactor may also be selected to maintain the velocity of the reaction mixture in the cooling zones at a rate sufficient to optimize heat transfer. It will be understood that herein, the term 'internal diameter of the tubular reactor" refers to the diameter of the tubular reactor at the widest point along the length of the tubular reactor. Optionally, the tubular reactor may have an internal diameter in the range of from 20 mm to 120 mm, in the range of from 30 mm to 100 mm, or in the range of from 40 mm to 90 mm.

Optionally, the at least one thermocouple device of the tubular reactor further comprises at least one support structure extending from the gasket into the tubular reactor. Optionally, the support structure extends towards the central axis of the tubular reactor. The support structure comprises a body having a channel. Preferably, the channel runs lengthways through the centre of the body. It will be understood that the support structure may have any shape provided it encloses a part of the thermocouple probe, provides structural support to the thermocouple probe, and minimises resistance to fluid flow. For example, the support structure may have a generally cylindrical shape. It will be understood that such a shape may minimise resistance of the reactor fluid passing the support structure and thus reduce turbulence caused by the support structure. It may be that the support structure has a hydrodynamic profile.

When the thermocouple device according to the present invention comprises a support structure, the thermocouple probe extends from the gasket, through a channel of the support structure and extends from the at least one support structure towards the central axis of the tubular reactor. The tip of the thermocouple probe at least extends beyond the support structure so that the tip makes good contact with the reaction mixture. A supported length of the at least one thermocouple probe is located within the channel of the at least one support structure, and an unsupported length of the at least one thermocouple probe comprising at least the tip of the thermocouple probe extends from the at least one support structure towards the central axis to the tubular reactor. Thus, the support structure protects and provides support to the supported length of the thermocouple probe located inside the support structure without obstructing the tip of the thermocouple probe. The support structure may reduce or prevent distortion or bending of the thermocouple probe that may be caused by the high velocity and pressure of the reaction mixture within the reactor. The channel of the support structure may align with a bore of the gasket body. The support structure is arranged such that the thermocouple probe may be inserted through the bore of the gasket body and into the channel of the support structure.

Optionally, the unsupported length of the at least one thermocouple probe is in the range of from 3 mm to 10 mm, optionally in the range of from 3 mm to 8 mm, or optionally from 4 mm to 6 mm. The unsupported length of the thermocouple probe may be adjusted to achieve a balance between structural support provided by the support structure and obtaining an accurate temperature reading by minimizing obstruction of the tip of the thermocouple probe. The supported length may be at least at least 20 mm, at least 50 mm, at least 80 mm or at least 100 mm.

The support structure may be cast molded with the gasket body. Alternatively, the support structure may be pre-formed and attached to the gasket body, for example by welding. The support structure may be manufactured from any material able to withstand typical high pressure polymerization conditions such as high pressure and elevated temperatures. The support structure may be manufactured from the same material as the gasket and/or tubular reactor wall. Optionally, the support structure is formed from a carbon steel or stainless steel. Preferably, the support structure is formed from stainless steel. It will be understood that such materials are able to withstand the high operation pressures and temperatures of a high pressure tubular reactor. Optionally, the carbon steel or stainless steel has a minimum yield strength of 930 MPa and a minimum ultimate tensile strength of 960 MPa.

Optionally, the tubular reactor has a length in the range of from 200 metres to 5000 metres, for example in the range of from 1000 metres to 4000 metres. It will be understood that the length of the tubular reactor is the total length of the tubular reactor including all reaction zones and all cooling zones of the tubular reactor.

Optionally, the tubular reactor further comprises at least one initiator injection point, wherein the at least one initiator injection point is configured to allow initiator from an initiator source to be injected into the tubular reactor at the at least one initiator injection point. It will be understood that injection of initiator into the tubular reactor at the initiator injection point initiates the polymerization reaction. Each of the at least one initiator injection points defines the start of a reaction zone. The tubular reactor may only comprise one reaction zone, in which case the tubular reactor will only comprise one initiator injection point. In particular, a tubular tail reactor may comprise only one initiator injection point and thus only one reaction zone. Alternatively, the tubular reactor may comprise multiple initiator injection points and thus multiple reaction zones. It will be understood that herein the term 'multiple' means two or more. Optionally, one or more of the at least one thermocouple device is located in a reaction zone. Optionally, at least 4, at least 6 or at least 12 thermocouple devices are provided in a reaction zone. Optionally, and when the tubular reactor comprises multiple reaction zones, at least one of the at least one thermocouple device is present in each reaction zone and preferably multiple of the at least one thermocouple device is present in each reaction zone. Providing at least one thermocouple device according to the present invention in a reaction zone allows the temperature within the reaction zone to be measured. Providing at least one thermocouple device according to the present invention in more than one reaction zone, if present, allows the temperature of the tubular reactor to be measured at multiple locations.

It is expected that once initiator is injected into the reactor, the temperature will rise rapidly as the monomer feed undergoes polymerization. Once the initiator is used up, the polymerization reaction stops and the temperature of the reaction mixture starts to fall. It may be advantageous to provide one of the at least one thermocouple device at or immediately downstream of the initiator injection point. For example, at least one thermocouple device according to the present invention may be located no more than 15 m, optionally no more than 10 m, downstream of the initiator injection point. Optionally, multiple thermocouple devices according to the present invention, if present, are located at equal intervals along the length of the reaction zone. For example, at intervals of 10 to 15 m along the length of the reaction zone.

Optionally, a cooling zone is located downstream of a reaction zone. The cooling zone is a region of the tubular reactor where the temperature of the reaction mixture comprising monomer, polymer and optionally comonomer is reduced before the reaction mixture enters an additional reaction zone or leaves the reactor. Optionally, the tubular reactor comprises multiple reaction zones interspaced with cooling zones. Optionally, one or more of the at least one thermocouple device is located in the at least one cooling zone. Optionally, one or more thermocouple devices according to the present invention are located in each cooling zone. Preferably, the one or more thermocouple devices located in a cooling zone are spaced apart along the length of the cooling zone by between 40 m to 200 m.

Optionally, the tubular reactor is a tubular tail reactor configured to receive an outlet stream comprising polymer, unreacted monomer and optionally unreacted comonomer from an autoclave reactor. It will be understood that following polymerization in an autoclave reactor the outlet stream discharged from the autoclave reactor comprises a mixture of polymer and unreacted monomer. If a comonomer was present in the autoclave reaction mixture, the outlet stream may also comprise unreacted comonomer. It will be understood that unreacted monomer and unreacted comonomer is (co)-monomer that has been exposed to polymerization conditions in a reactor but has not undergone a polymerization reaction. The tubular tail reactor is configured to receive unreacted monomer in the outlet stream of an autoclave reactor and to polymerise the unreacted monomer. Suitable tubular tail reactors are known to the person skilled in the art. Optionally, multiple tubular tail reactors may be arranged in series. Initiator is injected into the tubular tail reactor to initiate a polymerisation reaction. Optionally, fresh monomer and/or comonomer is injected into the tubular tail reactor in addition to the unreacted monomer and/or unreacted comonomer of the outlet stream of the autoclave reactor.

Optionally, one or more of the at least one thermocouple device according to the present invention comprises two or more thermocouple probes. Optionally, the thermocouple probes are arranged symmetrically around the central axis of the tubular reactor. If the thermocouple device comprises more than one thermocouple probe, the gasket of the thermocouple device may comprise multiple bores for receiving the thermocouple probes, wherein each thermocouple probe is inserted into a separate bore within the gasket body. For example, when the thermocouple device comprises two thermocouple probes, the gasket body may comprise two bores and each of the two thermocouple probes are inserted into a separate bore.

Optionally, the tubular reactor is for high pressure polymerization of ethylene and optionally a comonomer. The tubular reactor may be a high pressure tubular reactor for polymerising ethylene to form a polyethylene composition. When a comonomer is present, the polyethylene composition formed may comprise a co-polymer of polyethylene and comonomer. When ethylene is present as the only monomer and no comonomer is present, the polyethylene composition formed may comprise a homopolymer of polyethylene e.g. LDPE.

According to a second aspect of the invention there is also provided a polymerization reactor system for polymerizing a monomer and optionally a comonomer to form a polymer, wherein the polymerization reactor system comprising the tubular reactor according to the first aspect of the invention. The polymerization reactor system further comprises a monomer source such as a storage tank containing monomer, optionally a comonomer source such as a storage tank containing comonomer, a primary compressor for compressing the monomer to an intermediate pressure, a secondary compressor for compressing the monomer to a pressure of at least 1000 bar, preferably in the range of from about 2000 bar to about 3500 bar, optionally to the reactor pressure. A monomer source, a primary compressor, and a secondary compressor are provided upstream of the tubular reactor. The primary compressor is arranged to receive monomer from the monomer source. The secondary compressor is arranged downstream of the primary compressor. Thus, monomer flows from the monomer source to the primary compressor and from the primary compressor to the secondary compressor. The primary and secondary compressor pressurizes the monomer feed before the monomer is passed into the tubular reactor. An initiator source such as a storage tank containing initiator is configured to provide initiator to one or more initiator injection points of the tubular reactor, for example via an initiator injection line. A pressure let-down valve is located downstream of the tubular reactor and product mixture discharges the tubular reactor via the pressure let-down valve. Suitable monomers, comonomers and initiators are disclosed herein. Discharged product mixture from the tubular reactor passes through the pressure let-down valve. It will be understood that a product mixture comprises the polymer and optionally unreacted monomer and optionally unreacted comonomer. Optionally, the reactor system is for high-pressure polymerization of ethylene to form a polyethylene composition. The polymerization reactor system may further comprise at least one separation unit downstream of the high pressure let-down valve for separating polymer from unreacted monomer if present and optionally unreacted comonomer.

Optionally, the polymerization reactor system further comprises at least one autoclave reactor upstream of the tubular reactor and the tubular reactor is a tubular tail reactor configured to receive an outlet stream comprising polymer, unreacted monomer and optionally unreacted comonomer from the autoclave reactor. The outlet stream of the autoclave reactor is routed to the inlet of the tubular reactor. The polymerization reactor may comprise multiple autoclave reactors, for example at least two or at least three autoclave reactors which may be arranged in parallel or series. The polymerization reactor may comprise multiple tubular tail reactors, for example at least two or at least three tubular tail reactors, arranged in parallel or series. Optionally, at least one cooling zone is located between an autoclave reactor and a tubular tail reactor. The cooling zone may comprise a cooler, such as a water jacket, that lowers the temperature of the outlet stream of the autoclave to the desired inlet temperature for the tubular tail reactor.

According to a third aspect of the invention there is also provided a method of preparing a polymer in the polymerization reactor system according to the second aspect of the invention. It will be understood that the polymerization reactor system comprises a tubular reactor according to the first aspect of the invention. The method comprises the steps of:
(i) compressing monomer from the monomer source in the primary and secondary compressors;
(ii) introducing the monomer into the tubular reactor, and optionally introducing a comonomer from the comonomer source into the tubular reactor;
(iii) introducing initiator from the initiator source into the tubular reactor;
(iv) polymerizing the monomer and optional comonomer in the tubular reactor to form the polymer;
(v) discharging a product mixture comprising the polymer from the tubular reactor through the pressure let-down valve; and,
(vi) isolating the polymer;
wherein the method further comprises measuring a temperature within the tubular reactor during step (iv) using the at least one thermocouple device of the tubular reactor. It will be understood that the temperature within the tubular reactor is measured by the tip of the thermocouple probe of the thermocouple device. It may be that the method according to the third aspect of the invention allows accurate temperature measurement while minimising or eliminating the number of reactor defouling or bump cycles used in a standard polymerization process. The product mixture may comprise unreacted monomer and optionally unreacted comonomer if comonomer was present in the polymerization stage.

Preferably, the method according to the second aspect of the invention is a continuous process. In a continuous process at least two of steps (i)-(vi) are performed simultaneously. Preferably, all of steps (i)-(vi) are performed simultaneously.

Optionally, the monomer is ethylene and the polymer is polyethylene homopolymer or polyethylene copolymer. When the monomer is ethylene and no comonomer is present, the polyethylene composition will comprise a homopolymer polyethylene, such as LDPE. It may be that the polymerization reactor system comprises a comonomer source and the method comprises pressurizing the comonomer in a primary and secondary compressor, optionally the same primary and secondary compressors used to pressurize the monomer, and polymerizing the monomer and comonomer in the reactor to form a polyethylene copolymer.

The temperature measurements taken by the thermocouple device(s) of the tubular reactor according to the present invention may be recorded and constructed into a reactor temperature profile. It will be understood that a reactor temperature profile may refer to the temperature recorded by each thermocouple device at a given point in time. Thus the temperature profile corresponds to the temperature within the reactor at a given distance along the tubular reactor. It may be that temperature measurements are taken with the thermocouple device(s) at regular time intervals or continuously over the course of the polymerization reaction. The measured temperature may be recorded as a temperature vs time graph for each thermocouple device, thus allowing the temperature over time at a given location within the reactor to be visualised.

Optionally, the tubular reactor comprises at least one initiator injection point, and step (iii) comprises injecting initiator from the initiator source into the tubular reactor at the at least one initiator injection point. Each of the at least one initiator injection points defines the start of a reaction zone. Optionally, one or more of the at least one thermocouple devices according to the present invention are located in a reaction zone. Optionally, and when the tubular reactor comprises multiple reaction zones, one or more of the at least one thermocouple devices according to the present invention are located in each reaction zone. The method may further comprise measuring a temperature within the tubular reactor at a reaction zone using the one or more of the at least one thermocouple device located in the reaction zone. Such a method may allow the temperature profile along the length of the tubular reactor to be determined.

Optionally, the tubular reactor comprises a cooling zone located downstream of a reaction zone. Optionally, one or more of the at least one thermocouple device is located at a cooling zone and the method further comprises measuring a temperature within the tubular reactor at the at least one cooling zone using the one or more thermocouple device located in the cooling zone.

Optionally, the polymerization reactor system further comprises at least one autoclave reactor located upstream of the tubular reactor, and the tubular reactor is a tubular tail reactor configured to receive an outlet stream comprising polymer, unreacted monomer and optionally unreacted comonomer from the autoclave reactor. The outlet stream of the autoclave reactor is routed to the inlet of the tubular reactor. When the tubular reactor is a tubular tail reactor in connection with an autoclave reactor, the step (ii) of introducing monomer, and optionally comonomer, into the tubular reactor comprises introducing the outlet stream comprising polymer, unreacted monomer and optionally unreacted comonomer from the autoclave into the tubular reactor. Optionally, no further monomer or optional comonomer is introduced into the outlet stream so that fresh monomer and optional fresh comonomer is not introduced into the tubular tail reactor. It will be understood that fresh (co)-monomer refers to (co)-monomer that has not previously passed through a polymerization reactor, such as an autoclave reactor or tubular reactor. Alternatively, the step (ii) of introducing monomer, and optionally a comonomer, into the tubular reactor comprises introducing additional monomer, and optionally additional comonomer into the tubular tail reactor in addition to the unreacted monomer, and optional unreacted comonomer present in the outlet stream of the autoclave reactor. It will be understood that the additional monomer and optional additional comonomer is fresh (co)-monomer. The fresh monomer and optional fresh comonomer may be added to the outlet stream of the autoclave reactor. Additionally or alternatively, the fresh monomer and optional fresh comonomer may be introduced directly into the tubular tail reactor in a side stream. Initiator is introduced into the tubular tail reactor to initiate the polymerization reaction. The composition of the initiator solution introduced into the tubular reactor may be different to the initiator solution introduced into the autoclave reactor. Suitable initiator compositions are known to the skilled person.

The step of isolating polymer may include passing polymer through at least one separator. The reaction mixture may be separated into a polymer stream and an unreacted monomer, and optionally unreacted comonomer stream. Herein, the term `reaction mixture' refers to a mixture of unreacted monomer, optionally unreacted comonomer, and polymer formed in the tubular reactor. The unreacted monomer and optionally unreacted comonomer may be recycled to the tubular reactor.

The flow rate of initiator into the reactor at the one or more initiator injection points may be used to control the temperature of the reactor. Additionally or alternatively, the flow rate of the monomer and optionally comonomer, may be used to control the temperature profile of the reactor. The method may further comprise adjusting the flow rate of monomer, and optional comonomer, and/or initiator in response to the temperature measured within the tubular reactor using the at least one thermocouple probe of the at least one thermocouple device of the tubular reactor. For example, if the temperature within the reactor falls below a desired temperature, for example a temperature in the range of from 250 °C to 350 °C, the flow rate of monomer, optional comonomer, and/or initiator may be increased to increase the temperature within the reactor. This will promote further polymerization, increasing the temperature within the reactor. In contrast, if the temperature within the reactor exceeds a desired temperature, for example, a temperature in the range of from 250 °C to 350 °C, the flow rate of the monomer, optional comonomer, and/or initiator may be decreased to decrease the temperature within the reactor. A reduced flow rate of initiator and/or monomer into the reactor will slow the polymerization reaction, reducing the temperature within the reactor. The temperature of the reactor may be continuously measured and the flow rate of monomer, optional comonomer, and/or initiator may be continuously adjusted in a feedback loop.

It will of course be appreciated that features described in relation to one aspect of the present invention may be incorporated into other aspects of the present invention. For example, the method of the invention may incorporate any of the features described with reference to the apparatus of the invention and *vice versa.*

### Description of the Drawings

Embodiments of the present invention will now be described by way of example only with reference to the accompanying drawings of which:

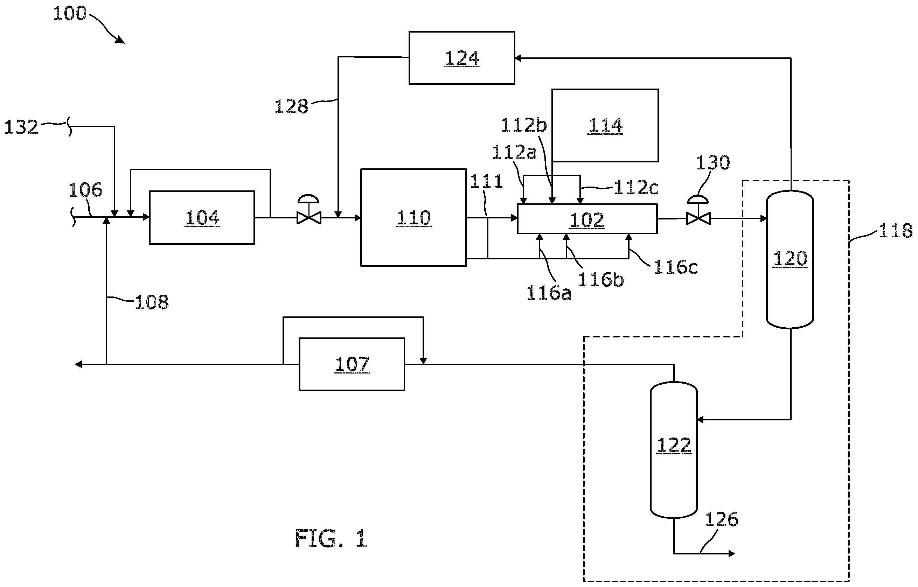

FIG. 1 is a schematic of a polymerization reactor system utilizing a tubular reactor having at least three reaction zones in accordance with the present disclosure;

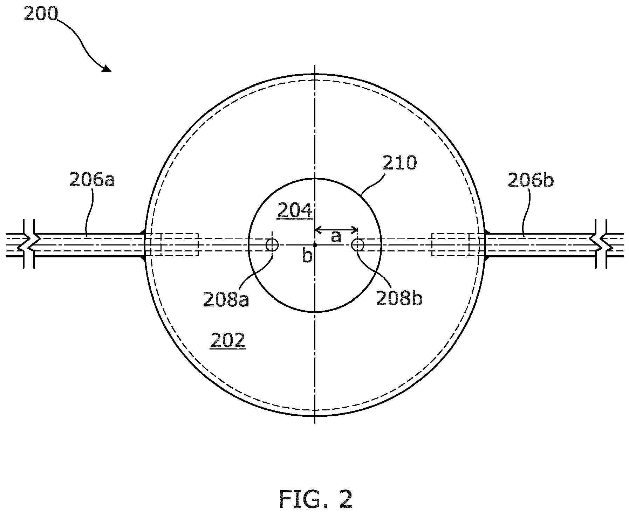

FIG. 2 is a cross-sectional view of a tubular reactor comprising a thermocouple device according to the prior art. The distance, a, between the tip of the thermocouple probe and the central axis, b, is greater than 1/3 R, wherein R is the radial distance from the central axis to the tubular reactor wall at the junction between the two tubular reactor wall sections;

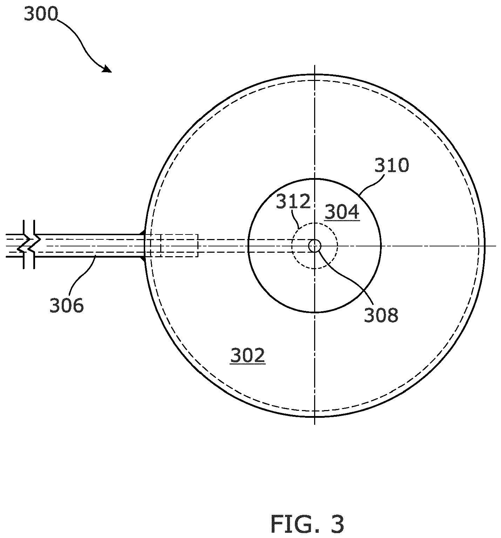

FIG. 3 is a cross-sectional view of a tubular reactor comprising a thermocouple device according to the present invention. The distance, a, between the tip of the thermocouple probe and the central axis, b, is less than or equal to 1/3 R, wherein R is the radial distance from the central axis to the tubular reactor wall at the junction between the two tubular reactor wall sections;

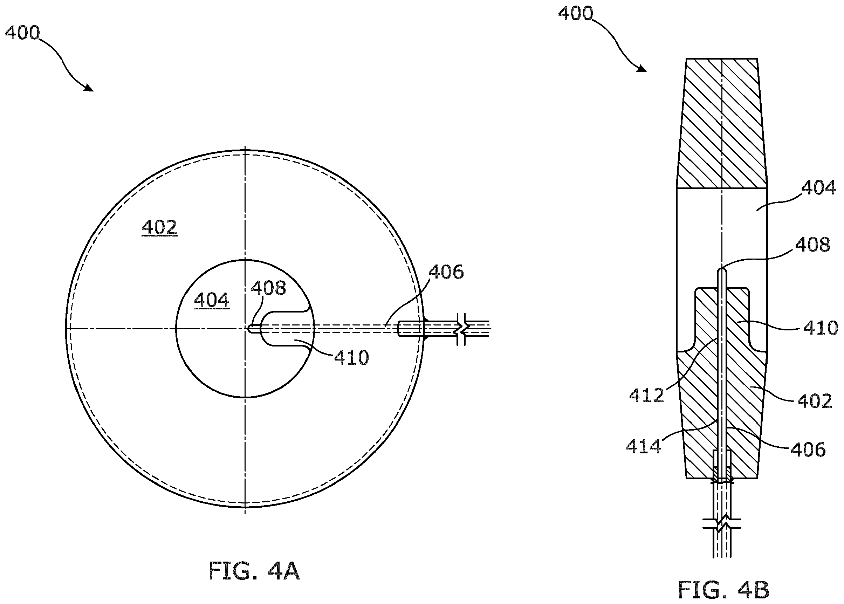

FIG. 4A is a cross-sectional view of a thermocouple device of a tubular reactor according to the present invention. The thermocouple device comprises a structural support and the thermocouple probe is inserted into the structural support so that the tip of the thermocouple probe extends from the structure support into the opening of the gasket of the thermocouple device;
FIG. 4B is a top view of a cross-section of the thermocouple device of FIG. 4A. The structural support protrudes from the gasket into the gasket opening. A supported length of the probe is located within the support structure. An unsupported length of the probe including the tip of the thermocouple probe extends beyond the support structure into the opening of the gasket;

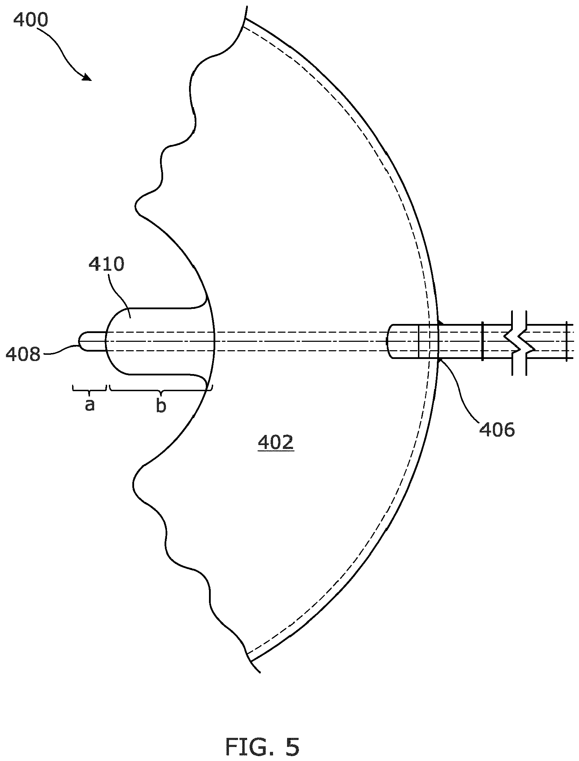

FIG. 5 is a cross-section cut-away view of the thermocouple probe and support structure of FIGs 4A and 4B;

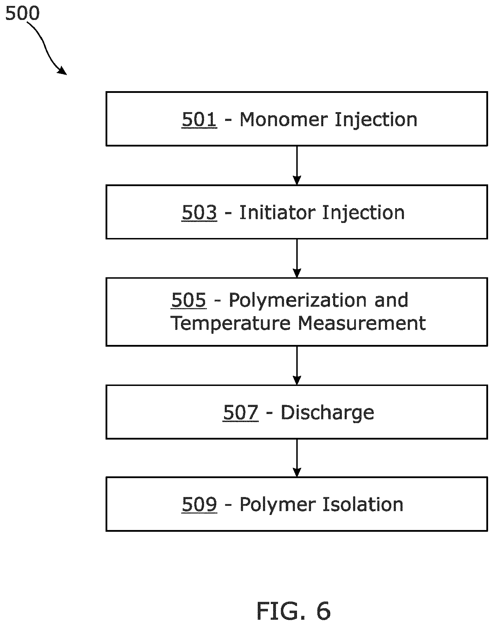

FIG. 6 is a flow chart of steps of a method of preparing a polymer in a polymerization reactor system according to the present invention;

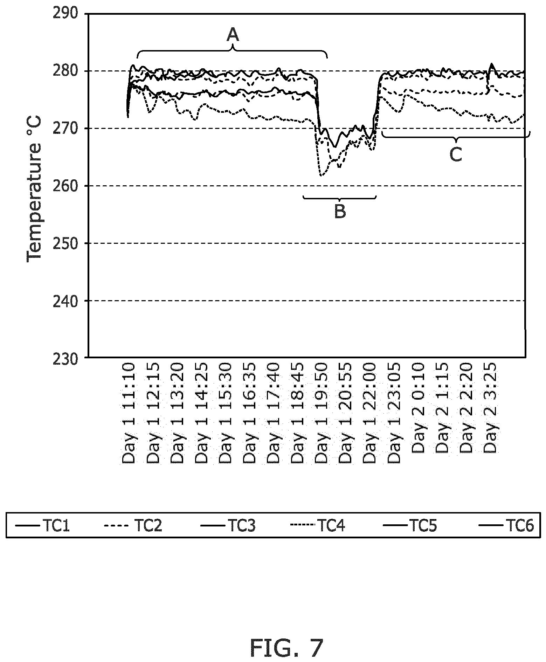

FIG. 7 is a graph showing the temperatures measured by five thermocouple devices (TC1, TC2, TC3, TC5 and TC6) of a tubular reactor wherein the distance between the tip of each thermocouple probe of each thermocouple device and the central axis of the tubular reactor was equal to or less than 1/3 R, wherein R is the radial distance from the central axis to the tubular reactor wall at the junction between the two tubular reactor wall sections. The five thermocouple devices were located in the same reaction zone of a tubular reactor. A sixth thermocouple device (TC4) was also used to measure the temperature of the reaction zone of the tubular reactor. The distance between the tip of the thermocouple probe of the sixth thermocouple device and the central axis of the tubular reactor was greater than 1/3 R. The temperature recorded by the five thermocouple devices (TC1, TC2, TC3, TC5 and TC6) remained stable throughout the polymerization reaction. In contrast, the temperature recorded by the sixth thermocouple device (TC4) decreased over the course of the polymerization reaction.

### Detailed Description

### Polymerization reactor system

As referred to herein, "high pressure polymerization" refers to a highly exothermic polymerization reaction that is performed in reactors, such as tubular reactors or autoclave reactors, under high reactor operating pressures, for example the reactor operating pressure in a high pressure polymerization process may be at least 1000 bar (100 MPa), or at least 2000 bar (200 MPa), or at least 3000 bar (300 MPa).

Features of the polymerization reactor system according to the present invention will be discussed with reference to FIG. 1. Preferably, the polymerization reactor system is for polymerizing ethylene. The polymerization reactor system comprises a tubular reactor 102. The tubular reactor 102 has a length in the range of from about 200 metres to about 5,000 metres. The tubular reactor 102 has an internal diameter in the range of from about 20 mm to about 120 mm. It will be understood that the length and diameter of the tubular reactor may be selected depending on the desired heat removal capacity, throughput and amount of turbulent flow necessary.

A primary compressor 104 is in fluid communication with the tubular reactor 102 and in fluid communication with a monomer source (not shown) (preferably an ethylene source) via an intake conduit 106. The intake pressure of the primary compressor 104 may be in the range of from about 15 bar to about 100 bar. The primary compressor 104 increases the pressure of the monomer to be in the range of from about 250 bar to about 350 bar. The primary compressor 104 may be a single compressor that alone pressurizes the monomer to the pressure of a recycle stream, or it may be two or more compressors in series or in parallel that, in combination, pressurize the fresh monomer to the pressure of the monomer recycle system. In addition to fresh monomer, the primary compressor 104 may receive monomer, preferably ethylene, recycled from various units including a product separation unit and/or from primary and secondary compressor leakage systems, where available. The primary compressor 104 may be in fluid communication with a purge gas compressor 107 via a recycle conduit 108 for recycled monomer from the purge gas compressor 107. The primary compressor 104 pressurizes monomer to the pressure of the ethylene recycle system 124.

Monomer, preferably ethylene, discharged from the primary compressor 104 may be divided into two streams, one stream being combined with recycled monomer and discharged into the suction of the secondary compressor 110, and the other stream (not shown) may be injected into the monomer/polymer mixture downstream of the high-pressure, let-down valve, thereby providing rapid cooling of the monomer/polymer mixture prior to entry into the product separation unit 118. The primary compressor 104 has a discharge pressure that is substantially equal to the pressure of the high pressure monomer recycle system and may be, for example, in the range between about 240 bar to about 350 bar, optionally in the range between about 280 bar to about 320 bar.

A secondary compressor 110 upstream of the tubular reactor 102 is in fluid communication with the primary compressor 104. Monomer is cooled upon discharge from the primary compressor 104 and prior to intake into the secondary compressor 110. The secondary compressor 110 compresses the monomer to a pressure of at least 1,000 bar for supply to the tubular reactor 102. The pressure may be in the range of from 1,000 bar to about 3,500 bar, optionally in the range of from about 2,000 bar to about 3,500 bar. Operation at pressures higher than 3,100 bar may be feasible, and may enhance conversion of monomer, but operation at such high pressures may increase costs. The skilled person will select an appropriate pressure depending on the operational configuration and desired polymer properties. Similar to the primary compressor 104, the secondary compressor 110 may be driven by a single motor, or alternatively comprise two or more compressors in series or in parallel driven by separate motors. It is to be understood that the compressors may be in any configuration provided said configuration is adapted to compress the monomer from the intermediate pressure (of the monomer as it leaves the primary compressor 104) to the desired reactor pressure, for example, between about 1,000 bar to about 3,100 bar. The primary compressor 104 may operate at a gas throughput in the range of, for example, from 30 tonnes/hour to 120 tonnes/hour ("T/h"), in the range of from 50 to 100 tonnes/hour and in the range of from 40 to 90 tonnes/hour. It will be understood that the relative capacities of the compressors are immaterial to the present polymerization processes.

Monomer, preferably ethylene, is discharged into the tubular reactor 102 via conduit 111 and heated to at least about 95°C, at least about 135°C, or at least about 160°C in order to promote the decomposition of the initiator and start the polymerization reaction. The initiator is injected into the tubular reactor 102 at at least one initiator injection point. Preferably, the reactor 102 comprises multiple initiator injection points, for example at least three different initiator injection points 112a, 112b, 112c along the length of the tubular reactor 102. Each initiator injection point defines a reaction zone. Thus, the reactor 102 of FIG. 1 comprises three reaction zones. It will be understood that the tubular reactor according to the present invention may have one reaction zone, or multiple reaction zones. Initiator may be transferred from the initiator source 114 to the initiator injection points 112a, 112b, 112c via an initiator injection line (not shown).

For large tubular reactors, monomer may be discharged from the secondary compressor 110 via two or more discharge streams through conduits with one stream entering a front end of the tubular reactor 102 and the other stream(s) entering as side-stream(s) 116a, 116b, 116c spaced lengthwise along the tubular reactor 102. As shown in FIG. 1, the plurality of monomer feed locations 116a, 116b, 116c may comprises at least three monomer feed locations. However, depending on the polymerization process, the tubular reactor 102 may have at least one, at least three, at least five or at least ten monomer feed locations. As shown in FIG. 1, monomer may be fed into the plurality of monomer feed locations 116a, 116b, 116c on tubular reactor 102 from multiple conduits connected to the secondary compressor 110. Before discharging into the tubular reactor 102, monomer side-streams may be cooled, for example, to between 10°C and 20°C in order to reduce the temperature of the reaction mixture. As described herein, the total conversion of monomer to polymer along the length of the reactor is, in practice, limited by the ability to cool the reaction mixture, and so cooling sidestreams can allow an increase in conversion for a given tubular reactor.

As also shown in FIG. 1, multiple free-radical initiator injection points (as shown in FIG. 1, three free-radical initiator points 112a, 112b, 112c) are also spaced lengthwise of the tubular reactor 102 to cause polymerization of monomer into polymer in at least three reaction zones. Monomer may be converted into polymer in at least three, or at least six reaction zones or more. Tubular reactors 102 comprising three reaction zones include a first reaction zone, a second reaction zone and a third reaction zone. Tubular reactors 102 comprising six reaction zones include a first reaction zone, a second reaction zone, a third reaction zone, a fourth reaction zone, a fifth reaction zone, and a sixth reaction zone. In the case of six reaction zones, six monomer feed locations may be spaced lengthwise along tubular reactor 102 (e.g., 2 feed locations in addition to the 3 locations 116a, 116b, and 116c shown in FIG. 1); and similarly, six free-radical initiator injection points (e.g., 2 free-radical initiator positions in addition to the 3 points 112a, 112b, 112c shown in FIG. 1) are also spaced lengthwise of the reactor 102. Initiators may be oxygen, peroxides and similar agents. Suitable initiators are described herein. If comonomer is present in the polymerization process, comonomer may be introduced into the tubular reactor as part of the monomer feed. Alternatively, the comonomer may be introduced into the tubular reactor in a different feed to the monomer.

Each initiator injection point 112 is associated with a reaction zone. Injection of initiator into the tubular reactor 102 causes an exothermic temperature rise that is removed by a cooling at the reaction zone and downstream of that reaction zone. The cooling takes place through the tube wall, optionally aided by a cooling liquid as a heat transfer medium and/or by a feed of cold monomer that is added downstream. Further, initiator may be added downstream to form another reaction zone for converting additional monomer into polymer. Thus, as the reaction mixture travels along the length of the tubular reactor, the temperature of the reaction mixture increases to a peak and then decreases until the next initiator injection position is reached, whereupon the process begins again. A reaction zone downstream of an initiator injection point in which the polymerization reaction occurs is known as "the reaction zone." The tubular reactor 102 is generally equipped with at least one temperature regulated heating/cooling jacket in each reaction zone. A cooling zone (not shown) may be present after each reaction zone. The cooling zones are provided to lower the temperature of the reaction mixture before the reaction mixture enters the next reaction zone or exits the reactor. The cooling zone may be provided with a cooling jacket to control the temperature of the cooling zone. Additionally or alternatively, cool monomer may be injected into the tubular reactor at a cooling zone to lower the temperature of the reaction mixture in the cooling zone.

Polymerization commences immediately downstream of the first reaction zone thereby causing the temperature of the reaction mixture to rise due to the exothermic nature of the polymerization. As the temperature rises, initiator decomposition and polymerization increase in rate, accelerating the heat generation and causing the temperature to rise further. As initiator is consumed, initiation and polymerization slow and, at the point where heat generation equals heat conducted away from the reaction mixture, the temperature peaks and then begins to fall.

In each reaction zone, monomer, preferably ethylene, is converted to polymer and, therefore, having a larger number of reaction zones will generally increase conversion. However, each reaction zone will typically necessitate increasing the length of the tubular reactor and, therefore, will increase the pressure drop across the reactor. In the present processes, initiator may be fed from an initiator source 114 comprising one or more tanks of initiator and injected at multiple initiator injection points such as at least 4, 5, or 6 different points along the tubular reactor 102 thereby giving rise to at least 4, 5, or 6 different reaction zones. Generally, peak temperatures for a reaction zone may be in the range of from about 170°C to about 350°C.

Polymer compositions produced by polymerization processing in the tubular reactor 102 may be discharged directly into a separation unit 118 or to a product cooler (not shown). For example, as shown in FIG. 1, mixture of polymer and unreacted monomer, and optionally unreacted comonomer, discharges to a separation unit 118. As shown in FIG. 1, the separation unit 118 comprises a high pressure separator 120 and a low pressure separator 122. Product separation, however, may be carried out in a single stage, if desired. As shown in FIG. 1, for multiple stage separations, in a first stage, polymer is separated from unreacted monomer such as ethylene. Unreacted ethylene gas may be fed to a high pressure recycle gas system 124. In a second stage, molten polymer is decompressed and separated ethylene gas may flow to a purge gas compression system 107. The pressure in the last stage of the separator unit 118 (or in the low pressure separator 122) is in the range of from about 1 bar to about 10 bar, or from about 1 bar to about 3 bar.

As shown in FIG. 1, the high pressure separator 120 receives monomer/polymer mixture discharged from the tubular reactor 102. The high pressure separator 120 operates in the range of from about 200 bar to about 350 bar. The high pressure separator 120 is connected to a low pressure separator 122 for further monomer removal. Molten polymer is discharged from the low pressure separator 120 via molten polymer conduit 126 to a polymer finishing section (not shown) with an extruder (not shown). The high pressure separator 120 discharges separated volatile monomer-rich phase of unreacted monomer into the recycle gas system 124 at a pressure similar to pressurized gas discharged from the primary compressor 104. Unreacted monomer discharges from the recycle gas system 124 through recycle conduit 128 and is combined with monomer feed from the primary compressor 104 and discharged into the secondary compressor 110. Unreacted monomer from the low pressure separator 122 discharges into a pressure purge compressor 107 at a pressure above an intake pressure of the primary compressor 104. It will be understood that comonomer may be introduced at various positions in the process in a similar manner to the introduction of monomer.

In the process of polymerizing monomer, such as ethylene, in a tubular reactor, once the desired throughput of monomer through the secondary compressor 110 and into the reactor 102 is established, the pressure in the reactor is controlled by a high-pressure, let-down valve 130, through which the product mixture (polymer composition, unreacted monomer, and optionally unreacted comonomer) discharges from the tubular reactor 102. Opening the valve 130 decreases the pressure in the tubular reactor 102; closing the valve 130 increases the pressure in the tubular reactor 102. Moreover, a pressure drop exists along the length of the tubular reactor 102 which forces the reaction mixture along the reactor at a desired velocity (the term "reactor pressure" herein refers to the maximum pressure in the reactor 102, that is, the pressure immediately downstream of the secondary compressor 110, unless another meaning is obvious from the context).

As described herein, a chain transfer agent may be added at various positions in the process. Suitable chain transfer agents are described herein. Chain transfer agents may be added in each monomer feed. This may be achieved by mixing the chain transfer agent with the monomer feed before the monomer is compressed by the secondary compressor 110. Chain transfer agent may be added along the length of the tubular reactor 102, although it may be consumed unequally and so concentration variations along the tube may result. As shown in FIG. 1, a source of chain transfer agent 132 may be in fluid connection with the primary compressor 104 and hence distributed, after passing through the secondary compressor 110 to the different monomer feeds 116a, 116b, 116c spaced along the tube of tubular reactor 102. Alternatively, the source of chain transfer agent may be in direct fluid connection with the secondary compressor 110 so that chain transfer agent is supplied directly into the secondary compressor 110. A recycle conduit is in fluid communication with the low pressure separator 122 and the purge compressor 106. Recycle gas from the high pressure separator 120 may contain unconsumed chain transfer agent and can be passed to the intake of the secondary compressor 110. Thus, the chain transfer agent and monomer may form a single, common gas stream with the desired concentration of transfer agent for compression in the secondary compressor 110 and for supply to the various feed positions 116a, 116b, 116c along the tube of tubular reactor 102.

It will be understood that the present invention also applies to polymerization reactors comprising combination of autoclave and tubular tail reactors. The polymerization system configuration is substantially the same as shown in FIG. 1 except that an autoclave reactor is located upstream of the tubular tail reactor and downstream of the secondary compressor. The secondary compressor feeds into the autoclave reactor rather than directly into the tubular tail reactor. The outlet stream of the autoclave reactor comprising polymer, unreacted monomer and optionally unreacted comonomer is fed into the tubular tail reactor. The tubular tail reactor may only comprise one initiator injection point and thus one reaction zone. Alternatively, the tubular tail reactor may comprise multiple initiator injection points and thus multiple reaction zones.

### Polymerization Conditions

As used herein, the terms "polymerization temperature" and "reactor temperature" are interchangeable. Reactor temperature refers to the peak temperature in the reactor, or if multiple reaction zones are present, the peak temperature in each reaction zone. It will be understood that the peak temperature in a reaction zone may be the same as, or different to the peak temperature in another reaction zone.

In a method of preparing a polymer according to the present invention, the high pressure polymerization conditions comprise reactor temperatures from about 120 °C to about 335° C. The peak temperature for each reaction zone may advantageously be in the range of from 170 °C to 350 °C. For example, in at least one reaction zone the peak temperature may be in the range of from 170 °C to 250 °C, from 280 °C to 340 °C or from 290 °C to 315 °C. It will be understood that the temperature of the reaction zone may be chosen depending on the specific grade of polymer being produced and type of reactor. For example, in tubular tail reactors the peak temperature in a reaction zone may be no greater than 170 °C, no greater than 200 °C, or no greater than 220 °C. The increase in temperature in a reaction zone is proportional to the amount of polymer made in that reactor zone and so operating at high peak temperatures favors high conversion. However, the kinetics of ethylene polymerization are such that as the temperature rises, chain transfer to polymer increases relative to propagation of linear chains and the polydispersity index increases, resulting in an increase in the haze value of the polymer produced. Accordingly, the temperature may be selected in consideration of the desired polymer product properties. Optionally, in each reaction zone upstream of an initiator injection point (i.e., in all but the last reaction zone) the reaction mixture is cooled to at least 10 °C, at least 20 °C, more preferably to at least 40 °C, and most preferably to at least 50 °C, below the peak temperature of that reaction zone before the reaction mixture reaches the next initiator injection point.

The high pressure polymerization conditions comprise reactor pressures from about 1000 bar (100 MPa) to about 3500 bar (350 MPa). The proportion of the total monomer which enters the tubular reactor, whether in the front end stream or as a sidestream, which is converted to polymer before exiting the reactor is referred to as the conversion. In the process of the invention, the conversion is at least 18%, for example at least 28%. The conversion achieved is in part related to the pressure at which the reactor operates, with a higher front end pressure both increasing the rate of polymerization and making possible a greater pressure drop over the length of the reactor. However, operating at higher pressures imposes more strain upon the secondary compressor and also increases the energy consumption with a consequent cost disadvantage. For such reasons, it may be desirable in some instances to operate at a pressure of from 1000 bar (100 MPa) to 2800 bar (280 MPa) at a relatively low conversion, which may be, for example, approximately in the region of from 18% to 32%. Alternatively, it may be desirable to operate at a pressure in the region of 2300 bar (230 MPa) to 3100 bar (310 MPa) at a high conversion, for example, in the range of from 28% to 37%. However, pressure is only one of the factors which influence conversion and overall a conversion in the region of from 30% to 40% is preferred, with a more preferred range being from 30% to 37%.

### Monomer and Comonomer

Preferably, the monomer is an olefin. Preferably the monomer is ethylene and the resulting polymer is a polyethylene polymer.

The process of the invention may not only be used for the manufacture of ethylene homopolymers, but also ethylene copolymers. Such comonomer(s) will be pressurized and injected into the primary and/or secondary compressor and then fed into the polymerization reactor together with monomer, preferably ethylene.

Typical comonomers include, without limitation: vinyl ethers such as vinyl methyl ether, vinyl n-butyl ether, vinyl phenyl ether, vinyl beta-hydroxy-ethyl ether, and vinyl dimethylamino-ethyl ether; olefins such as ethylene, propyl-ene, butene-1, cis-butene-2, trans-butene-2, isobutylene, 3,3-dimethylbutene-1,4-methylpentene-1, hexane-1, octene-1, and styrene; vinyl-type esters such as vinyl acetate, vinyl butyrate, vinyl pivalate, and vinylene carbonate; haloolefins such as vinyl fluoride, vinylidene fluoride, tetrafluoroethyl-ene, vinyl chloride, vinylidene chloride, tetrachloroethylene, and chlorotrifluoroethylene; acrylic-type esters such as methyl acrylate, ethyl acrylate, n-butyl acrylate, t-butyl acrylate, 2-ethylhexyl acrylate, alpha-cyanoisopropyl acrylate, beta-cyanoethyl acrylate, o-(3-phenylpropan-1,3,-dionyl)phenyl acrylate, methyl methacrylate, n-butyl methacrylate, t-butyl methacrylate, cyclohexyl methacrylate, 2-ethylhexyl methacrylate, methyl methacrylate, glycidyl methacrylate, beta-hydroxethyl methacrylate, beta-hydrox-propyl methacrylate, 3-hydroxy-4-carbo-methoxy-phenyl methacrylate, N,N-dimethylaminoethyl methacrylate, t-butylaminoethyl methacrylate, 2-(1 -aziridinyl)ethyl methacry-late, diethyl fumarate, diethyl maleate, and methyl crotonate; other acrylic-type derivatives such as acrylic acid, methacrylic acid, crotonic acid, maleic acid, methyl hydroxy, maleate, itaconic acid, acrylonitrile, fumaronitrile, N,N-dimethylacrylamide, N-isopropylacrylamide, N-t-butylacrylamide, N-phenylacrylamide, diacetone acrylamide, methacrylamide, N-phenylmethacrylamide, N-ethylmaleimide, and maleic anhydride; and other compounds such as allyl alcohol, vinyltrimethylsilane, vinyltriethoxysilane, N-vinylcarbazole, N-vinyl-N-methylacetamide, vinyldibutylphosphine oxide, vinyldiphenylphosphine oxide, bis-(2-chloroethyl) vinylphosphonate and vinyl methyl sulfide.

Examples of preferred comonomers are vinyl acetate, methyl acrylate, methacrylic acid, ethyl acrylate, butyl acrylate or acrylic acid, or mixture thereof.

In some comonomer-containing polyethylenes, the amount of comonomer is below 10 wt %, but may also be 5 wt % or lower, 3 wt % or lower, or even 1 .5 wt % or lower. In other comonomer-containing polyethylenes, the amount of comonomer may however be 10 wt % or higher, such as 15, 20, 30 or 40 wt % or higher, depending on the desired end-use of the polymer.

Generally, the purity of the ethylene feed suitable for use in the processes according to the present invention is as provided by state-of-the-art steam crackers. In order not to interfere with the radical initiation reaction, the oxygen content in the feed should be below 5 ppm.

### Chain transfer agent

The process of the present invention preferably involves use of a chain transfer agent. The terms "chain transfer agent", also used interchangeably herein as "modifier", refer to a component that can be added to the polymerization process to control the molecular weight of the polymer by promoting chain transfer.

Examples of modifiers may include, but are not limited to, tetramethylsilane, cyclopropane, sulfur hexafluoride, methane, t-butanol, perfluoropropane, deuterobenzene, ethane, ethylene oxide, 2,2-dimethylpropane, benzene, dimethyl sulfoxide, vinyl methyl ether, methanol, propane, 2-methyl-3-butene-2-ol, methyl acetate, t-butyl acetate, methyl formate, ethyl acetate, butane, triphenylphosphine, methylamine, methyl benzoate, ethyl benzoate, N,N-diisopropylacetamide, 2,2,4-trimethylpentane, n-hexane, n-butane, isobutane, dimethoxymethane, ethanol, n-heptane, n-butyl acetate, cyclohexane, methylcyclohexane, 1 ,2-dichlorethane, acetonitrile, N-ethylacetamide, propylene, 1-butene, n-decane, N,N-diethylacetamide, cyclopentane, acetic anhydride, n-tridecane, n-butyl benzoate, isopropanol, toluene, hydrogen, acetone, 4,4-dimethylpentene-1, trimethylamine, N,N-dimethylacetamide, isobutylene, n-butyl isocyanate, methyl butyrate, n-butylamine, N,N-dimethylformamide, diethyl sulfide, diisobutylene, tetrahydrofuran, 4-methylpentene- 1, p-xylene, p-dioxane, trimethylamine, butene-2, 1-bromo-2-chloroethane, octene- 1,2-methylbutene-2, cumene, butene-1, methyl vinyl sulfide, n-butyronitrile, 2-methyl-butene-1, ethylbenzene, n-hexadecene, 2-butanone, n-butyl isothiocyanate, methyl 3-cyanopropionate, tri-n-butylamine, 3-methyl-2-butanone, isobutyronitrile, di-n-butylamine, methyl chloroacetate, 3-methylbutene-1, 1,2-dibromoethane, dimethylamine, benzaldehyde, chloroform, 2-ethylhexene-1, propionaldehyde, 1,4-dichlorobutene-2, tri-n-butylphosphine, dimethylphosphine, methyl cyanoacetate, carbon tetrachioride, bromotrichloromethane, di-n-butylphosphine, acetaldehyde, proprionaldehyde, and phosphine. Further details and other suitable transfer agents are described in Advances in Polymer Science, Vol. 7, pp. 386-448 (1970).

Optionally, the polyethylene produced by the apparatus described herein or according to the process as described herein contains one or more C2 to C12 unsaturated modifiers. The C2 to C12 unsaturated modifiers contain at least one unsaturation, but can also contain multiple conjugated or non-conjugated unsaturations. In case of multiple unsaturations, it is preferred that they are non-conjugated. Optionally, the unsaturation of the C2 to C12 unsaturated modifier can be di-substituted with one or more alkyl groups in the beta position. Preferred C2 to C12 unsaturated modifiers include propylene, isobutylene, or a combination thereof. The amount of the modifier(s) can range of from a low of about 0.001 wt%, 0.01 wt%, 0.1 wt %, 0.3 wt %, or 0.8 wt % to a high of about 3.0 wt %, 6.0 wt %, or 10.0 wt %, based on the total weight of the polyethylene. Optionally, when the tubular reactor is a tubular tail reactor provided in combination with an autoclave reactor, less than 1 wt%, less than 0.1 wt% or less than 0.01 wt% modifier is present. It may be that no modifier is present.

The chain transfer agent may be added into the reaction mixture in any suitable way. It may be comprised in the polymerization initiator composition. Alternatively, the modifier may be injected into the monomer feed, such as into the inlet pipes feeding the secondary compressor. As the modifier is, in general, not fully consumed during one pass through the reactor, it is generally also present at a certain amount in the recycle ethylene returning to the secondary compressor.

### Polymerization Initiator and Initiator Composition

Initiators are used to initiate the free radical polymerization of monomer, preferably ethylene and optionally comonomer(s). Suitable initiators are organic peroxides. Usually, mixtures of different peroxides are used, the so-called "peroxide cocktails". Such a mixture of several peroxide initiators typically includes peroxides having different half-life times: generally ones that are active at the lowest temperature required for the given reaction start temperature (from about 120 °C to about 160 °C) and ones that are active at the highest temperature (up to about 335 °C) for the desired maximum temperature. Selection of an appropriate combination of different peroxides depends on the reactor-setup and the desired reaction temperature profile along the length of the reactor, and is within the general knowledge of a skilled person.

Organic peroxides useful as polymerization initiators are widely known in the art. Classes of peroxide initiators that are particularly useful for the present invention are, for example, the following: diacyl peroxides, dialkyl peroxydicarbonates, tert-alkyl peroxyesters, OO-tert-alkyl O -alkyl monoperoxycarbonates, di-tert-alkyl peroxides, di(tert-alkylperoxy)ketals, tert-alkyl hydroperoxides, and ketone peroxides.

Non-limiting examples of useful peroxides are, e.g. the following: dibenzoyl peroxide, dilauroyl peroxide, succinic acid peroxide, diisononanoyl peroxide, dioctanoyl peroxide, tert-butylperoxybenzoate, tert-butylperoxyacetate, tert-butylperoxymaleate, tert-butyl 2-ethylperoxyhexanoate, tert-butyl peroxy-3,5,5-trimethylhexanoate, tert-amyl 2-ethylperoxyhexanoate, 2,5-di(2-ethylhexanoyl-peroxy)2,5-di-methyl-hexane, tert-butylperoxypivalate, alpha-cumyl peroxyneoheptanoate, 3-hydroxy- 1,1-dimethylbutyl peroxyneodecanoate, OO-tert-butyl-O-(isopropyl)monoper-oxycarbonate, OO-tert-amyl-O-(2-ethylhexyl)monoperoxy-carbonate, ethyl-3,3-di(tert-amylperoxy)butyrate, n-butyl-4, 4-di(tert-butylperoxy)valerate, 1,1-di(tert-butylperoxy) cyclohexane, 2,2-di(tert-butylperoxy)butane, 1,1 -di(tert-amylperoxy)cyclohexane, 2,5-di-(tert-butylperoxy)-2,5-dimethyl-3-hexyne, 2,5-di-(tert-butylperoxy)-2,5-dimethyl-hexane, 2,5-di(tert-butylperoxy)-2,5-dimethylhexane, 1,3 (4)-bis(2-(tert-butyl-peroxy)-1-methylethyl)-benzene, di(tert-butyl)peroxide (DTBP), di(tert-amyl)peroxide, dicumylperoxide, tert-butyl cumyl peroxide, tert-butyl per-oxyisopropylcarbonate, tert-butyl peroxyisobutyrate, di(n-propyl)peroxydicarbonate, di(sec-butyl)peroxydicarbonate, di(2-ethylhexyl)peroxydicarbonate, di(n-hexadecyl)peroxy-dicarbonate, di(4-tert-tylcyclohexyl)peroxydicarbonate, tert-butylhydroperoxide, tert-amylhydroperoxide, alpha-cumylhydroperoxide, 2,5-dihydroperoxy-2,5-dimethyl-hexane, para-menthane hydroperoxide, mlp-isopropyl-al-pha-cumyl hydroperoxide. Such peroxides are marketed for example under the trade names TrigonoxTM and PerkadoxTM by Nouryon, or LuperoxTM by Arkema.

Preferred initiator mixtures, especially for tubular reactors contain a minimum of one and up to eight different types of initiators. Suitable mixtures of different organic peroxides, commonly referred to as peroxide cocktails, are known to those skilled in the art.

Optionally, the initiator (or initiator mixtures) may be injected into different reaction zones in the same initiator composition. The polymerization initiator composition used herein comprises at least one, preferably several, polymerization initiators as described above, dissolved in an organic solvent, as further described below, and optionally one or more additional modifiers, also as further described below.

Suitable organic solvents can include but are not limited to one or more non-coordinating, inert liquids including, but not limited to, straight and branched-chain hydrocarbons such as propane, isobutane, butane, n-butane, pentane, isopentane, hexanes, isohexane, heptane, octane, n-octane, dodecane, isododecane, and mixtures thereof; cyclic and alicyclic hydrocarbons such as cyclohexane, cycloheptane, methylcyclohexane, methylcycloheptane, and mixtures thereof such as can be found commercially (IsoparsTM from ExxonMobil); perhalogenated hydrocarbons such as perfluorinated C4 to C10 alkanes, chlorobenzene, and aromatic and alkylsubstituted aromatic compounds such as benzene, toluene, mesitylene, and xylene. Suitable solvents also include liquid olefins which may act as monomers or comonomers including ethylene, propylene, 1 -butene, isobutylene, 1 -hexene, 1 -pentene, 3-methyl- 1-pentene, 4-methyl-i -pentene, 1-octene, and 1 -decene. In certain embodiments, the initiator can include butane, n-butane, n-octane, or a mixture of one or more C9 to C12 paraffinic hydrocarbons.

The peroxide initiators (or initiator mixtures) may constitute from about 5 to about 50-wt % of the polymerization initiator composition, preferably from about 5 to about 40 wt %, more preferably from about 10 to about 40 wt %.

Optionally, in case an additional modifier (different from the initiator solvent) is used, such additional modifier as described above may be added to the reactor together with the monomer feed, or via one or more separate injection points. The amount of the transfer agent can be up to the concentration in the reaction mixture required to control the melt index of the product up to the required specification.

Preferably, the organic solvent as described above constitutes from about 50 to about 95 wt % of the entire solution comprising the peroxide(s) in the organic solvent, more preferably from about 65 to about 85 wt %, and most preferably from about 70 to about 85 wt %.

Based on the monomer feed (preferably ethylene and optionally comonomer(s)), the one or more polymerization initiator(s) constitute from about 30 to about 1500 weight ppm, preferably from about 50 to about 1000 weight ppm.

The organic solvent in which the initiator is dissolved may be used in an amount corresponding to about 100 to about 5000 weight ppm, preferably about 250 to about 3000-weight ppm, with respect to the monomer feed.

The polymerization initiator compositions according to the present invention may further contain conventional additives, such as radical scavengers to stabilize the initiator composition during storage.

### Polymer Product

It will be understood that the term "polymer" may be used to refer to homopolymers, copolymers, interpolymers, terpolymers, etc. A "polymer" has two or more of the same or different monomer units. A "homopolymer" is a polymer having monomer units that are the same. A "copolymer" is a polymer having two or more monomer units that are different from each other. The term "different" as used to refer to monomer units indicates that the monomer units differ from each other by at least one atom or are different isomerically. As used herein, the terms "polyethylene," "ethylene polymer," and "ethylene copolymer" mean a polymer or copolymer comprising at least 50 mol % ethylene units (preferably at least 70 mol % ethylene units, more preferably at least 80 mol % ethylene units, even more preferably at least 90 mol % ethylene units, even more preferably at least 95 mol % ethylene units or 100 mol % ethylene units (in the case of a homopolymer such as hompolyethylene).

As used herein, when a polymer or copolymer is referred to as including an olefin, the olefin present in such polymer or copolymer is the polymerized form of the olefin. For example, when a copolymer is said to have an "ethylene" content of 45 wt.% to 65 wt.% and a comonomer content of 35 wt% to 55 wt%, it is understood that the mer unit in the copolymer is derived from ethylene in the polymerization reaction and said derived units are present at 35 wt.% to 55 wt.%, based upon the weight of the copolymer. A copolymer can be higher order copolymers such as terpolymers, quaterpolymers, and the like.

As used herein, unless specified otherwise, percent by mole is expressed as "mol %," and percent by weight is expressed as "wt %." Comonomer content in the polymer composition is based on the total content of all monomers in the polymer.

Preferably, the tubular reactor, reactor system and method according to the present invention are suitable for preparing a polyethylene composition. The final polymer product (preferably homo-polyethylene or copolymer of ethylene and one or more of the above-listed comonomers) produced by the apparatus or according to the process as described herein include a wide range of low density polyethylenes (LDPE) that can be made using radical initiated high pressure processes with tubular or autoclave reactors. Generally, for a homopolymer LDPE the densities range between about 0.910 and 0.935 g/cm³, the polydispersities between about 5 and about 50, the melt index between about 0.1 and about 500 g/min, and the haze values between about 1 and 20. If desired, high comonomer contents can be realized, e.g. up to about 40 wt % comonomer. The molecular weight of the polymer can be modified by using different types and concentrations of modifier. The polymer density may be influenced by the type and amount of comonomer, and the polymerization temperature. Further, haze can be influenced by the reactor temperature, as well as the reactor pressure and the choice of the polymerization initiator. The main applications of these LDPE grades are in films and in extrusion coating. Optionally, the polymer comprises 50 wt% or more of monomer, 70 wt% or more of monomer, 80 wt% of weight or more of monomer, 95 wt% or more of monomer, or 100 wt% monomer (in the case of a homopolymer). For example, when the monomer is ethylene, the polymer may comprise 50 wt% or more of ethylene, 70 wt% or more of ethylene, 80 wt% of weight or more of ethylene, 95 wt% or more of ethylene, or 100 wt% ethylene (in the case of a homopolyethylene). It will be understood that the remaining wt% of the copolymer will correspond to the wt% of one or more comonomers.

Further, polyethylene compositions may be blends of LDPE and other polymers, such as additional polymers prepared from ethylene monomers. Exemplary additional polymers are LLDPE (e.g., LLDPE homopolymers and/or copolymers of ethylene and alpha-olefin(s)), nonlinear LDPE, very low density polyethylene ("VLDPE"), medium density polyethylene ("MDPE"), high density polyethylene ("HDPE"), differentiated polyethylene ("DPE"), and combinations thereof. DPE copolymers include EVA, EEA, EMA, EnBA, and other specialty copolymers.

### Tubular Reactor

A tubular reactor is typically a continuous, plug flow loop reactor. A tubular reactor typically has an initial part to which the monomer(s) are fed from the secondary compressor and wherein they are heated to the desired reaction start temperature, usually to at least about 120 °C, preferably at least about 135 °C, or in some cases even to at least about 160 °C. Once the desired temperature is reached, polymerization initiator composition is injected at the initiator injection point(s) in the tubular reactor to start the reaction. The pressure in the tubular reactor is generally from about 1000 bar (100 MPa) to about 3500 bar (350 MPa).

Tubular reactors, such as tubular tail reactors, may comprise only one initiator injection point and thus have only one reaction zone. Alternatively, tubular reactors may comprise multiple initiator injection points defining multiple reaction zones. The injected initiator decomposes into free radicals, which start the polymerization. Further points for injecting the initiator composition are located downstream along the length of the reactor. Optionally, the reactor has a total of at least two, preferably at least three, more preferably at least four distinct injection points, thereby giving rise to at least two, at least three, or at least four, respectively, reaction zones. The number of initiator injection points and initiator zones may be no more than six. In each reaction zone the polymerization is conducted as previously described herein. Preferably, the tubular reactor will generally be equipped with at least one temperature regulated cooling jacket in each reaction zone. The reaction mixture in any reaction zone may be cooled by the cooling jacket through which water or another cooling fluid is circulated or a combination of the cooling jacket and introduction of a side stream of cooled monomer.

The tubular reactor may further comprise a cooling zone located downstream of a reaction zone. Optionally, each reaction zone is followed by a cooling zone. The cooling zone allows the temperature of the reaction mixture to be reduced before passing the reaction mixture to a further reaction zone or discharging the reaction mixture from the tubular reactor. The temperature of the cooling zone may be controlled by a jacket water system. Alternatively or additionally, one or more cool side-streams of monomer may be introduced along the length of the length of the reactor in a cooling zone to reduce the temperature of the reaction mixture within the cooling zone.

The tubular reactor is generally cylindrical or tubular in shape. Preferably, the tubular reactor is suitable for high pressure polymerization of ethylene. The tubular reactor has a tubular reactor wall defining an internal space in which the polymerization reaction occurs. The tubular reactor may be formed from multiple tubular reactor wall sections. The tubular wall sections are arranged end to end to form the tubular reactor wall. It may be that no distinguishable boundary between the tubular reactor wall sections can be observed once the reactor is constructed. The tubular wall sections need not be in direct contact, for example, a gasket may be located between the tubular wall sections. The tubular wall sections may be flanged together to form a seal. The tubular reactor has a central axis which runs the length of the tubular reactor in the direction of flow.

The tubular reactor wall defines the diameter of the reactor. The tubular reactor is generally uniform in diameter, however there may be regions of the tubular reactor where the reactor narrows. Herein, the term 'internal diameter of the tubular reactor" refers to the diameter of the tubular reactor at the widest point along the length of the tubular reactor. In a polymerization reactor system in which a portion of the monomer discharged from the secondary compressor enters the tubular reactor as sidestreams, it may be desirable for the reactor to have regions of differing diameter increasing in stages down the length of the reactor as sidestreams enter. For example, for a process having a secondary compressor throughput of up to 180 tonnes/ hour at 3000 bar (300 MPa), 20% of which enters the front end of the tubular reactor and the rest enters as sidestreams, the tubular reactor may initially have a diameter in the range of 35 mm to 40 mm, and at the entry point of the first sidestream the diameter will increase, the increase being dependent on the size of that sidestream, and so on until after the last sidestream, the final diameter is in the region of 75 mm to 90 mm. In such a stepped tubular reactor, the internal diameter of the tubular reactor is the final diameter as that is the widest point along the length of the tubular reactor. The internal diameter of a tubular reactor chosen for any process according to the invention will be dependent upon the throughput of the secondary compressor, on the output pressure from the secondary compressor and on the length of the tubular reactor employed, all of which relate to the pressure drop experienced over the length of the reactor.

Optionally, the internal diameter of the tubular reactor may be in the range of from 20 mm to 120 mm, or from 40 mm to 80 mm, for example the internal diameter of the tubular reactor may be 85 mm. The internal diameter of the reactor is defined by the tubular reactor wall. An internal radius of the tubular reactor, which is half the internal diameter of the reactor, is defined as the radial distance from the central axis to the tubular reactor wall at the wides part of the tubular reactor.

Optionally, the tubular reactor has a length in the range of from 200 m to 5000 m, more preferably from 1000 m to 4000 m, or from 3000 m to 4500 m. It will be understood that the length of the tubular reactor is the total length of the reactor including all reaction zones and all cooling zones of the tubular reactor.

In the method of polymerizing monomer, preferably ethylene, in a tubular reactor according to the present invention, once the desired throughput of monomer through the secondary compressor and into the reactor is established, the pressure in the reactor is controlled by the high-pressure, let-down valve, through which the product mixture exits the reactor. Opening the valve decreases pressure in the tubular reactor; closing the valve increases the pressure. Moreover, a pressure drop exists along the length of the tubular reactor which forces the reaction mixture along the reactor at a desired velocity (the term "reactor pressure" herein refers to the maximum pressure in the reactor, that is, the pressure immediately downstream of the secondary compressor, unless another meaning is obvious from the context). The pressure drop over the length of the reactor is dependent on the condition that the pressure should not fall below the point at which phase separation for the reaction mixture occurs. The pressure drop for a given throughput can be reduced by increasing the internal diameter of the tubular reactor. However, increased tube diameter also makes effective cooling of the reactor mixture more difficult.

The tubular reactor may be a tubular tail reactor. It will be understood that a tubular tail reactor is a type of tubular reactor that is connected to an autoclave reactor and is configured to receive an outlet stream from the autoclave reactor. The autoclave reactor is located upstream of the tubular tail reactor. The outlet stream comprises the polymer produced in the autoclave reactor, unreacted monomer and optionally unreacted comonomer. The tubular tail reactor may have any feature described herein in relation to a tubular reactor.

Optionally, the polymerization reactor system disclosed herein comprises an autoclave and a tubular tail reactor. It may be that more than one autoclave is located upstream of the tubular tail reactor. It may be that more than one tubular tail reactor is located downstream of the autoclave reactor. A cold zone may be located between the autoclave and tubular tail reactor in which the temperature of the outlet stream of the autoclave is lowered to a desired temperature before being passed into the tubular tail reactor.

### Thermocouple Device

FIG. 2 shows a thermocouple device 200 configured for use in a tubular reactor according to the prior art. The thermocouple device 200 comprises a gasket 202. Gasket 202 is arranged between two tubular reactor wall sections of a tubular reactor (not shown) so that the central opening 204 of the gasket 202 aligns with the walls of the tubular reactor. The diameter of the central opening 204 of the gasket 202 is substantially equal to the diameter of the tubular reactor at the junction between the two tubular reactor wall sections. In use, fluid in the reactor flows through the section to tubular reactor upstream of the gasket 202, through the opening 204 of the gasket 202 and then through the section of the tubular reactor downstream of the gasket 202.

Each of two thermocouple probes 206a, 206b extend through a bore (not visible) in the body of the gasket 202 and from the gasket 202 into the opening 204. The tips 208a, 208b of the thermocouple probes 206a, 206b are located close to the internal wall 210 of the gasket 202, typically within 2-8 mm of the internal wall 210 of the gasket. In use, the reaction mixture flows through opening 202 and therefore the tips 208a, 208b of the thermocouple probes 206a, 206b are in contact with the reaction mixture. A conceptual centre point, b, of the opening 204 aligns with the central axis of the reactor (not shown) in use. The distance, a, between the central point, b, and the tips 208a, 208b of the thermocouple probes 206a, 206b is large, and is greater than 1/3R, wherein R is the radial distance from the central axis to the tubular reactor wall at the junction between the two tubular reactor wall sections. In FIG. 2, the opening 204 of the thermocouple device is flush with the internal surface of the tubular reactor wall (not shown). Thus, R is also equal to the distance from point b of FIG. 2, to the internal wall 210 of the gasket.

In contrast, a tubular reactor according to the present invention comprises at least one thermocouple device comprising at least one thermocouple probe wherein the distance between the central axis of the reactor and the tip of the thermocouple probe is equal to or less than 1/3 R, wherein R is the radial distance from the central axis to the tubular reactor wall at the junction between the two tubular reactor wall sections. With reference to FIG. 3, a thermocouple device 300 according to the present invention comprises a gasket 302. The gasket 302 may be any suitable gasket, for example a lens ring gasket or a cone ring gasket. The gasket 302 has a substantially cylindrical body and an opening 304 extends through the body of the gasket 302. The opening 304 is located in the centre of the body of the gasket 302. The body of the gasket 302 is configured to engage with and fill the space between two tubular reactor wall sections (not shown). The length of the body of the gasket 302 is defined as the distance between an end of the body in contact with the first of the two tubular reactor wall sections and an end of the body in contact with the second of the two tubular reactor wall sections. The length of the body of the gasket is in the range of from 20 mm to 120 mm.

The opening 304 of the gasket 302 is defined by an inner curved surface 310 of the gasket body. The diameter of the opening of the gasket is between 10 mm and 120 mm. The gasket 302 is arranged between two sections of the tubular reactor (not shown) so that the opening 304 of the gasket body 302 aligns with the walls of the tubular reactor. The centre of the opening 304 aligns with the central axis of the tubular reactor (not shown). The diameter of the central opening 304 of the gasket 302 is substantially equal to the diameter of the tubular reactor at the junction between the two tubular reactor wall sections. As the opening 304 has a diameter substantially equal to the diameter of the reactor at the junction between the two tubular reactor wall sections, it will be understood the internal radius of the opening 304 is equal to the radial distance, R, from the central axis to the tubular reactor wall at the junction between the two tubular reactor wall sections. In use, fluid in the reactor flows through the section of tubular reactor upstream of the gasket 302, through the opening 304 of the gasket 302 and then through the section of the tubular reactor downstream of the gasket 302. Thus, the opening 304 of the gasket 302 forms part of the tubular reactor when the gasket 302 is arranged between two tubular reactor wall sections. The two sections of tubular reactor and the gasket 302 are flanged together to form a seal that is able to withstand high pressures within the tubular reactor, such as at least 1000 bar.

The body of the gasket 302 further comprises a bore (not visible) extending through the gasket body to the opening 304. The bore extends the entire width of the body of the gasket 302. The bore is configured to receive the thermocouple probe 306. The thermocouple probe 306 is inserted into the bore so that the thermocouple probe 306 extends through the gasket body and into the opening 304 of the gasket. In use, the opening 304 of the gasket forms part of the tubular reactor, as explained above, thus the thermocouple probe 306 extends from the gasket 302 into the tubular reactor. The thermocouple probe 306 may therefore be used to measure the temperature within the reactor. The temperature of the reactor may be monitored over the course of a polymerization reaction using the thermocouple probe 306, for example by taking temperature measurements at regular time intervals or continuously during the polymerization process. The gasket 302 acts to receive and support the thermocouple probe so that at least the tip 308 of the thermocouple probe 306 is located in the reactor. The thermocouple probe 306 may be inserted into and removed from the bore when the gasket 302 is arranged between the two sections of the tubular reactor without having to disassemble the reactor.

The tip 308 of the thermocouple probe 306 is inserted into the tubular reactor so that the distance between the tip 308 of the thermocouple probe 306 and the central axis of the tubular reactor is equal to or less than 1/3 R, the radial distance from the central axis to the tubular reactor wall at the junction between the two tubular reactor wall sections. The thermocouple probe 306 is inserted to a depth sufficient that the tip 308 of the thermocouple probe 306 is located substantially in the centre of the opening 304. Although FIG. 3 shows the tip 308 of the thermocouple probe 306 is located substantially in the centre of the opening 304, it will be understood that the tip 308 of the thermocouple probe 306 may be located at any point provided the distance between the tip 308 and the central axis of the reactor is equal to or less than 1/3R, the radial distance from the central axis to the tubular reactor wall at the junction between the two tubular reactor wall sections. A conceptual zone 312 shown in FIG. 3, shows the region of the reactor 300 that may be occupied by the tip 308 of the thermocouple probe 306. Preferably, the tip does not extend beyond the central axis of the reactor 300, as shown in FIG. 3.

The thermocouple device 400 (as shown in FIG. 4A) is similar to the device 300 shown in FIG. 3, except that the thermocouple device 400 further comprises a support structure 410. The support structure 410 extends from the gasket body into the opening 404 of the gasket 402. The support structure 410 therefore extends into the reactor when the thermocouple device 400 is arranged between two tubular reactor wall sections (not shown). The function of the support structure 410 is to stabilise and support the thermocouple probe 406 that extends into the reactor. The support structure 410 has a substantially cylindrical body with a flared base. It will be understood that other suitable shapes may be used provided that the support structure 410 encloses and supports part of the thermocouple probe 406 and does not cause significant resistance to the reactor mixture flow. The support structure 410 has a channel (not shown) extending through the body of the support structure 410 and through which the thermocouple probe 406 extends.

FIG. 4B is a cross-sectional top view of the thermocouple device 400 of FIG. 4A. The support structure 410 is integral with the gasket body 402. The thermocouple probe 406 extends through bore 414 within the gasket body 402, through the channel 412 of the support structure 410 and into the opening 404.

As shown in FIG. 5, the total length of the thermocouple probe 406 extending beyond the gasket wall may conceptually be divided into a first length, a, and a second length, b. The first length, a, of the thermocouple probe 406 comprises the tip 408 of the thermocouple probe 406 and extends beyond the support structure 410 into the tubular reactor. The second length, b, of the thermocouple probe 406 is located within the channel of the at least one support structure 410. The first length, a, of thermocouple probe may be referred to as an unsupported length. The second length, b, of the thermocouple probe may be referred to as a supported length. The unsupported length is less than the supported length to minimise the amount of thermocouple probe 406 exposed to the harsh conditions within the reactor.

Referring to FIG. 6, in a method 500 of preparing a polymer in a polymerization reactor system in accordance with the present invention, in a first step 501 a monomer from a monomer source of the reactor system is compressed in a primary and secondary compressor. The compressed monomer is then introduced into a tubular reactor of the reactor system. In a second step 503, initiator from the initiator source of the reactor system is injected into the tubular reactor at an initiator injection point. It will be understood that the tubular reactor may comprise one or multiple initiator injection points as disclosed herein. In a third step 505, the monomer, and optional comonomer, is polymerized to form polymer. The third step of the method comprises measuring a temperature within the tubular reactor using the at least one thermocouple probe of the at least one thermocouple device of tubular reactor according to the present invention. In a fourth step 507, the product mixture comprising polymer, optionally unreacted monomer and optionally unreacted comonomer, is discharged from the tubular reactor through a pressure let-down valve of the reactor system. In a fifth step 509, the polymer is isolated from the product mixture using methods disclosed herein, such as by passing the product mixture through at least one separation device. Optionally, the monomer is ethylene and the polymer is a polyethylene.

Whilst the present invention has been described and illustrated with reference to particular embodiments, it will be appreciated by those of ordinary skill in the art that the invention lends itself to many different variations not specifically illustrated herein. By way of example only, certain possible variations will now be described. The thermocouple device may comprise multiple thermocouple probes, for example at least two thermocouple probes, or at least four thermocouple probes. Preferably, the multiple thermocouple probes are arranged symmetrically about the opening of the gasket of the thermocouple device. The thermocouple device may be located at any suitable location along the length of the tubular reactor, such as in a reaction zone or in a cooling zone. The tubular reactor may comprise multiple thermocouple devices so that the temperature within the reactor may be measured at multiple locations along the tubular reactor. The tubular reactor described herein may be a conventional tubular reactor or it may be a tubular tail reactor provided downstream of an autoclave reactor. An existing tubular reactor comprising a conventional thermocouple device may be modified to be according to the present invention by adjusting the insertion depth of the thermocouple probe of the conventional thermocouple device.

### Aspects of the Invention

The invention encompasses the following aspects:
Aspect 1. A tubular reactor for high pressure polymerization of a monomer and optionally a comonomer to form a polymer, wherein the tubular reactor has a tubular reactor wall and a central axis, wherein the tubular reactor wall is formed from tubular reactor wall sections arranged end to end about the central axis; and, wherein the tubular reactor comprises at least one thermocouple device comprising:
   a gasket arranged to seal a junction between two tubular reactor wall sections; and,
   at least one thermocouple probe comprising a tip for measuring a temperature within the tubular reactor, wherein the at least one thermocouple probe extends from the gasket into the tubular reactor;
   wherein the distance between the tip of the at least one thermocouple probe and the central axis of the tubular reactor is equal to or less than 1/3 R, wherein R is the radial distance from the central axis to the tubular reactor wall at the junction between the two tubular reactor wall sections.
Aspect 2. The tubular reactor according to Aspect 1, wherein the distance between the tip of the at least one thermocouple probe and the central axis of the tubular reactor is equal to or less than 1/6 R.
Aspect 3. The tubular reactor of Aspect 1 or Aspect 2, wherein the internal diameter of the tubular reactor is in the range of from 20 mm to 120 mm, optionally in the range of from 40 mm to 90 mm.
Aspect 4. The tubular reactor of any preceding Aspect, wherein the at least one thermocouple device further comprises at least one support structure extending from the gasket into the tubular reactor;
   wherein a supported length of the at least one thermocouple probe is located within a channel of the at least one support structure, and an unsupported length of the at least one thermocouple probe comprising at least the tip of the thermocouple probe extends from the at least one support structure towards the central axis of the tubular reactor.
Aspect 5. The tubular reactor of Aspect 4, wherein the unsupported length of the at least one thermocouple probe is in the range of from 3 mm to 10 mm, optionally in the range of from 3 mm to 8 mm.
Aspect 6. The tubular reactor of Aspect 4 or Aspect 5, wherein the support structure is formed from a carbon steel or stainless steel.
Aspect 7. The tubular reactor of any preceding Aspect, wherein the tubular reactor has a length in the range of from 200 metres to 5000 metres.
Aspect 8. The tubular reactor of any preceding Aspect, further comprising at least one initiator injection point, wherein the at least one initiator injection point is configured to allow initiator from an initiator source to be injected into the tubular reactor at the at least one initiator injection point, wherein each of the at least one initiator injection points defines the start of a reaction zone, and wherein one or more of the at least one thermocouple device is located in a reaction zone.
Aspect 9. The tubular reactor of Aspect 8, wherein a cooling zone is located downstream of a reaction zone, and wherein one or more of the at least one thermocouple device is located in the cooling zone.
Aspect 10. The tubular reactor of any one of Aspects 1 to 9, wherein the tubular reactor is a tubular tail reactor configured to receive an outlet stream from an autoclave reactor, wherein the outlet stream comprises polymer, unreacted monomer and optionally unreacted comonomer.
Aspect 11. The tubular reactor of any preceding Aspect, wherein one or more of the at least one thermocouple device comprises two or more of the at least one thermocouple probe, optionally wherein the thermocouple probes are arranged symmetrically around the central axis of the tubular reactor.
Aspect 12. A polymerization reactor system for polymerizing a monomer and optionally a comonomer to form a polymer, comprising the tubular reactor according to any one of Aspects 1 to 11, wherein the polymerization reactor system further comprises a monomer source, optionally a comonomer source, a primary compressor for compressing the monomer to an intermediate pressure, a secondary compressor for compressing the monomer to a pressure of at least 1000 bar, an initiator source, and a pressure let-down valve located downstream of the tubular reactor.
Aspect 13. The polymerization reactor system of Aspect 12, wherein the tubular reactor is according to Aspect 10, and wherein the polymerization reactor system further comprises at least one autoclave reactor upstream of the tubular tail reactor.
Aspect 14. A method of preparing a polymer in the polymerization reactor system according to Aspect 12 or Aspect 13, wherein the method comprises the steps of:
   (i) compressing monomer from the monomer source in the primary and secondary compressors;
   (ii) introducing the monomer into the tubular reactor, and optionally introducing a comonomer from the comonomer source into the tubular reactor;
   (iii) introducing initiator from the initiator source into the tubular reactor;
   (iv) polymerizing the monomer and optional comonomer in the tubular reactor to form the polymer;
   (v) discharging a product mixture comprising the polymer from the tubular reactor through the pressure let-down valve; and,
   (vi) isolating the polymer;
   wherein the method further comprises measuring a temperature within the tubular reactor during step (iv) using the at least one thermocouple device of the tubular reactor.
Aspect 15. The method according to Aspect 14 wherein the tubular reactor is according to Aspect 8, wherein step (iii) comprises injecting initiator from the initiator source into the tubular reactor at the at least one initiator injection point; and wherein the method further comprises measuring a temperature within the tubular reactor at a reaction zone of the tubular reactor using the one or more of the at least one thermocouple device located in the reaction zone.
Aspect 16. The method according to Aspect 15, wherein the tubular reactor is according to Aspect 9, and wherein the method further comprises measuring a temperature within the tubular reactor at the cooling zone using the one or more of the at least one thermocouple device located in the cooling zone.
Aspect 17. The method of any one of Aspects 14 to 16 wherein the polymerization reactor system is according to Aspect 13, and wherein the step (ii) of introducing the monomer and optionally the comonomer into the tubular tail reactor comprises introducing the outlet stream of the autoclave reactor comprising polymer, unreacted monomer and optionally unreacted comonomer into the tubular reactor.
Aspect 18. The method according to Aspect 17, wherein the step (ii) of introducing the monomer, and optionally the comonomer, into the tubular tail reactor comprises introducing additional monomer, and optionally additional comonomer, into the tubular tail reactor in addition to the unreacted monomer, and optional unreacted comonomer of the outlet stream of the autoclave reactor.
Aspect 19. The method according to any of Aspects 14 to 18, wherein the method further comprises adjusting the flow rate of monomer, and optional comonomer, and/or initiator in response to the temperature measured within the tubular reactor using the at the at least one thermocouple device of the tubular reactor.
Aspect 20. The tubular reactor of any one of Aspects 1 to 11, or the polymerization reactor system of any one of Aspects 12 to 13, or the method according to any one of Aspects 14 to 19, wherein the monomer is ethylene and the polymer is a polyethylene homopolymer or polyethylene copolymer.

### Examples

In a first example, the final reaction zone of a tubular reactor comprising a total of six reaction zones was provided with five thermocouple devices (TC1, TC2, TC3, TC5 and TC6) having a thermocouple tip insertion depth into the reactor according to the present invention and one standard thermocouple device (TC4) having a thermocouple tip insertion depth not according to the present invention. The tubular reactor had an internal diameter of 50.8mm, was operated at a throughput of 85 t/h and 35% conversion to form a polyethylene polymer having a melt index (MI) of 0.75-2.0.

The five thermocouple devices (TC1, TC2, TC3, TC5 and TC6) according to the present invention comprised a cone ring gasket having an internal diameter of 54 mm and a support structure. The thermocouple probe of each of the five thermocouple devices were inserted into the reactor so that each thermocouple probe had an unsupported length of 5.1 mm, a supported length of 20.7 mm and the distance between each tip of each thermocouple probe and the central axis of the tubular reactor was 1.2 mm. The one standard thermocouple device (TC4) comprised a thermocouple probe and the tip of the thermocouple probe was located 21 mm from the central axis of the tubular reactor.

The temperature of the reactor was monitored by each thermocouple device over the course of a polymerization process. The temperature profile recorded by the five thermocouple devices having a thermocouple probe insertion depth according to the present invention are labelled TC1, TC2, TC3, TC5 and TC6 in FIG. 7. The temperature recorded by the thermocouple device having an insertion depth according the prior art is labelled TC4 in FIG. 7. Section A of FIG. 7, shows the temperature recorded by each of the six thermocouple probes during a polymerization reaction. The temperature recorded by the five thermocouple probes (TC1, TC2, TC3, TC5 and TC6) according to the present invention remained stable throughout the polymerization process. In contrast, the thermocouple probe TC4 recorded a decline in temperature over the polymerization reaction. This decline in recorded temperature was not because the temperature within the reaction zone was falling, but was instead because the accuracy of the thermocouple probe declined over the course of the reaction. Without wishing to be bound by theory, it is thought that a reactor fouling layer builds up along the reactor wall over the course of the polymerization reaction and prevents good contact of the thermocouple probe tip of the conventional thermocouple device with the reaction mixture within the reactor. By the end of the polymerization reaction shown in Section A, the temperature difference between the temperature recorded by the thermocouple devices according to the present invention and the temperature recorded by the conventional thermocouple was around 10 °C. It is thought that the thermocouple devices having a thermocouple insertion depth according to the present invention have sufficient length to extend beyond the reactor fouling layer and therefore provide a more consistent and accurate measurement of reactor fluid temperature.

Section B of FIG. 7 shows the temperature recorded by the thermocouple devices during a reactor defouling event. Section C of FIG. 7, shows the temperature measured by each thermocouple probe following the reactor defouling event. Initially after defouling, the temperature recorded by the conventional thermocouple probe (TC4) is close to, although still a few degrees less than, the temperature recorded by the thermocouple devices (TC1, TC2, TC3, TC5 and TC6) having an insertion depth according to the present invention. Again, over the course the polymerization reaction, reactor fouling impacts the performance of the conventional thermocouple probe TC4 resulting in a decreasing peak temperature recording.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A tubular reactor for high pressure polymerization of a monomer and optionally a comonomer to form a polymer, wherein the tubular reactor has a tubular reactor wall and a central axis, wherein the tubular reactor wall is formed from tubular reactor wall sections arranged end to end about the central axis; and, wherein the tubular reactor comprises at least one thermocouple device comprising:
a gasket arranged to seal a junction between two tubular reactor wall sections; and,
at least one thermocouple probe comprising a tip for measuring a temperature within the tubular reactor, wherein the at least one thermocouple probe extends from the gasket into the tubular reactor;
wherein the distance between the tip of the at least one thermocouple probe and the central axis of the tubular reactor is equal to or less than 1/3 R, wherein R is the radial distance from the central axis to the tubular reactor wall at the junction between the two tubular reactor wall sections.

2. The tubular reactor according to claim 1, wherein the distance between the tip of the at least one thermocouple probe and the central axis of the tubular reactor is equal to or less than 1/6 R.

3. The tubular reactor of claim 1 or claim 2, wherein the internal diameter of the tubular reactor is in the range of from 20 mm to 120 mm, optionally in the range of from 40 mm to 90 mm.

4. The tubular reactor of any preceding claim, wherein the at least one thermocouple device further comprises at least one support structure extending from the gasket into the tubular reactor;
wherein a supported length of the at least one thermocouple probe is located within a channel of the at least one support structure, and an unsupported length of the at least one thermocouple probe comprising at least the tip of the thermocouple probe extends from the at least one support structure towards the central axis of the tubular reactor.

5. The tubular reactor of claim 4, wherein the unsupported length of the at least one thermocouple probe is in the range of from 3 mm to 10 mm, optionally in the range of from 3 mm to 8 mm.

6. The tubular reactor of claim 4 or claim 5, wherein the support structure is formed from a carbon steel or stainless steel.

7. The tubular reactor of any preceding claim, wherein the tubular reactor has a length in the range of from 200 metres to 5000 metres.

8. The tubular reactor of any preceding claim, further comprising at least one initiator injection point, wherein the at least one initiator injection point is configured to allow initiator from an initiator source to be injected into the tubular reactor at the at least one initiator injection point, wherein each of the at least one initiator injection points defines the start of a reaction zone, and wherein one or more of the at least one thermocouple device is located in a reaction zone.

9. The tubular reactor of claim 8, wherein a cooling zone is located downstream of a reaction zone, and wherein one or more of the at least one thermocouple device is located in the cooling zone.

10. The tubular reactor of any one of claims 1 to 9, wherein the tubular reactor is a tubular tail reactor configured to receive an outlet stream from an autoclave reactor, wherein the outlet stream comprises polymer, unreacted monomer and optionally unreacted comonomer.

11. The tubular reactor of any preceding claim, wherein one or more of the at least one thermocouple device comprises two or more of the at least one thermocouple probe, optionally wherein the thermocouple probes are arranged symmetrically around the central axis of the tubular reactor.

12. A polymerization reactor system for polymerizing a monomer and optionally a comonomer to form a polymer, comprising the tubular reactor according to any one of claims 1 to 11, wherein the polymerization reactor system further comprises a monomer source, optionally a comonomer source, a primary compressor for compressing the monomer to an intermediate pressure, a secondary compressor for compressing the monomer to a pressure of at least 1000 bar, an initiator source, and a pressure let-down valve located downstream of the tubular reactor.

13. A method of preparing a polymer in the polymerization reactor system according to claim 12, wherein the method comprises the steps of:
(vii) compressing monomer from the monomer source in the primary and secondary compressors;
(viii) introducing the monomer into the tubular reactor, and optionally introducing a comonomer from the comonomer source into the tubular reactor;
(ix) introducing initiator from the initiator source into the tubular reactor;
(x) polymerizing the monomer and optional comonomer in the tubular reactor to form the polymer;
(xi) discharging a product mixture comprising the polymer from the tubular reactor through the pressure let-down valve; and,
(xii) isolating the polymer;
wherein the method further comprises measuring a temperature within the tubular reactor during step (iv) using the at least one thermocouple device of the tubular reactor.

14. The method according to claim 13, wherein the method further comprises adjusting the flow rate of monomer, and optional comonomer, and/or initiator in response to the temperature measured within the tubular reactor using the at the at least one thermocouple device of the tubular reactor.

15. The tubular reactor of any one of claims 1 to 11, or the polymerization reactor system of claim 12, or the method according to claim 13 or claim 14, wherein the monomer is ethylene and the polymer is a polyethylene homopolymer or polyethylene copolymer.
